(19) Europäisches Patentamt
European Patent Office
Office européen des brevets

(11) **EP 1 176 516 A2**

(12) **EUROPEAN PATENT APPLICATION**

(43) Date of publication:
**30.01.2002 Bulletin 2002/05**

(51) Int Cl.$^7$: **G06F 17/14**

(21) Application number: **01116721.0**

(22) Date of filing: **18.07.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **18.07.2000 JP 2000217113**
          **02.08.2000 JP 2000234131**

(71) Applicant: **VICTOR COMPANY OF JAPAN LIMITED Yokohama-Shi Kanagawa-Ken (JP)**

(72) Inventor: **Takaoka, Katsumi Yokosuka-shi, Kanagawa-ken (JP)**

(74) Representative: **HOFFMANN - EITLE Patent- und Rechtsanwälte Arabellastrasse 4 81925 München (DE)**

(54) **Recursive discrete fourier transformation apparatus**

(57)    This invention relates to a Fourier transformation device, in which when storing successively supplied data temporarily by deleting old data while obtaining the newest N data, a difference between a data value supplied just before and a data value to be deleted is supplied by a data updating portion (1), this supplied data value and a result of FFT operation just before, stored temporarily in a memory portion (4) are supplied to a recursive DFT operating portion (3) and these values are computed according to a predetermined method so as to output a result of the FFT operation with respect to the newest N data values.

FIG.1

$2$ BASIC FREQUENCY SETTING PORTION

SAMPLING DATA $x(t+N)$ → $1$ DATA UPDATING PORTION → $3$ RECURSIVE DFT OPERATING PORTION → OUTPUT $X_r(k,t+1)+jX_i(k,t+1)$ $0 \leq k \leq N-1$

$4$ MEMORY

**Description**

BACKGROUND OF THE INVENTION

1. Field of the Invention

The present invention relates to an arithmetic operation apparatus for Fourier transformation and more particularly to an arithmetic operation apparatus for carrying out Fourier transformation with simple arithmetic processing so as to obtain an operation result of Fourier transformation in a short time.

2. Description of the Related Art

Conventionally, the Fourier transformation method used in frequency analysis and the like of time-series data stream has been employed in high compression encoding of audio signal and moving picture signal as well as spectrum analysis of signals in audio signal processing field, moving picture data processing field for medical system and the like. Further, the Fourier transformation method has been widely used as modulation technology and demodulation technology in communication field.

According to the Fourier transformation method, data stream sampled as digital amount is treated as N groups (N is an integer, for example, 1024) and a time interval, in which the N-data stream exist, is assumed as a window period while that window period is assumed to be basic frequency. Then, signal components of data stream existing in the window period are obtained as real part and imaginary part of a harmonic signal of the basic frequency.

Then, such data stream is handled as discrete data stream sampled at every predetermined period and the discrete data is subjected to Fourier transformation. The method is called discrete Fourier transformation (DFT). The discrete Fourier transformation technology is employed as an analysis technology for control technology, in which, for example, a state of production process is obtained with the discrete data, the quality of the process is kept optimum by analyzing the obtained data and the rate of acceptable products in manufactured products is improved. Its application field has been widening every year.

According to the discrete Fourier transformation technology, supplied signals are sampled at every predetermined time interval and a voltage value obtained by the sampling is obtained as sampled data. When the data stream, which is a group of the obtained data, is N data obtained in a predetermined time t, x(t), x(t+1), x(t+2), ..., x(t+N-2), x(t+N-1), a value x (k, t) of the discrete Fourier transformation obtained with respect to the N data is defined in a following equation.

$$X(k,t) = \frac{1}{\sqrt{N}} \sum_{n=t}^{t+N-1} x(n) \exp\left[-j2(n-t)\frac{\pi k}{N}\right]$$

$$= \frac{1}{\sqrt{N}} \sum_{n=t}^{t+N-1} \left\{ x_r(n)\cos\left[2(n-t)\frac{\pi k}{N}\right] + x_i(n)\sin\left[2(n-t)\frac{\pi k}{N}\right] \right\}$$

$$+ j\frac{1}{\sqrt{N}} \sum_{n=t}^{t+N-1} \left\{ -x_r(n)\sin\left[2(n-t)\frac{\pi k}{N}\right] + x_i(n)\cos\left[2(n-t)\frac{\pi k}{N}\right] \right\} \cdots (1)$$

$$\text{for } k = 0,1, ..., N-1$$

As evident from this equation, the Fourier transformation is carried out on supplied data stream just such that its inherent basic function is convoluted in every point to be obtained and an operation for convoluting the basic function is conducted by a plurality of multiplication processings.

When that multiplication processing is carried out with a special multiplying circuit or a digital signal processor (DSP), it has been known that a load upon hardware used for arithmetic operation in the multiplying circuit or the DSP is increased tremendously.

As for the load on this multiplication processing, a transformation equation expressed with the aforementioned equation (1) needs multiplications of $4 \times N^2$ times, so that in case where N is 1024, for example, the multiplication frequency is about 4,200,000 times. Therefore, the load of the arithmetic operation is very large and further, if the number N of points to be handled as the data stream is increased, the multiplication processing frequency is increased by second power, which is unfavorable in terms of actual field.

Thus, as the discrete Fourier transformation equation, fast Fourier transformation (FFT), whose operation efficiency is raised by deforming the stream by paying attention to the regularity that the basic function is composed of a cyclic function, is employed actually.

An arithmetic operation method called butterfly operation is employed for the FFT. The butterfly operation is so constructed that a simple integer, for example, 2 is defined as a basic number and supplied binary complex data is subjected to complex operation comprised of a single addition, subtraction and multiplication each so as to output binary complex data.

Therefore, the N-point FFT is comprised of $\log_2 N$-step stage and $(N/2)\log_2 N$ butterfly operations and an operation result of the FFT can be obtained depending on the number of multiplications of $(2N)\log_2 N$ times. Consequently, the N-point FFT is used as a Fourier transformation method ensuring a high operating efficiency.

Usually, the FFT or discrete Fourier transformation (DFT) is used in such a manner, so that data stream, sampled successively at a predetermined time interval and then supplied, is subjected to Fourier transformation. In that Fourier transformation, the sampled data stream is stored in a memory circuit in succession temporarily and when the number of data stored in the memory circuit temporarily reaches N, the Fourier transformation processing for that N data is started.

In aperiod of the transformation processing, data stored temporarily in the memory circuit is kept as it was memorized and subjected to Fourier transformation processing. When the arithmetic operation is terminated, new data is supplied to the memory circuit and stored temporarily. After a predetermined amount of N is stored, next transformation processing is started.

However, because data is supplied without any interruption even during Fourier arithmetic operation, according to another available method, a memory circuit for storing N data streams is provided as another system and each time when N data is supplied, temporary storage processing and arithmetic operation are carried out alternately and Fourier transformation processing is carried out continuously on time-series data.

Because the Fourier transformation conducts arithmetic operation processing on N temporarily stored data streams while handling the data stream as a block unit, a delay time corresponding to at least N data is generated in such Fourier transformation processing, so that any transformation processing result cannot be obtained at real time.

Thus, although data stream is supplied successively, a result of Fourier analysis cannot be obtained until each sampling of N data streams is finished.

Contrary to this, in order to carry out Fourier transformation processing on N-point data streams containing new data supplied successively to be sampled and obtain a result of the Fourier transformation processing each time when sampled data is supplied, it comes that Fourier transformation processing of N points has to be carried out in a single sampling period and even in case where FFT arithmetic operation method developed for such high-speed arithmetic operation is employed, N-time arithmetic operation speed is demanded to obtain a result of Fourier transformation executed continuously from the FFT. However, in normal condition, it is difficult to execute such ultra FFT and supply a result of the arithmetic operation.

In Fourier transformation, generally, FFT arithmetic operation processing method is employed. Usually, the FFT arithmetic operation processing is carried out on N-point data stream supplied by quantitizing sampling frequency with fs at a frequency interval of fs/N.

Generally, even during Fourier transformation, data is fetched into other buffer memory so that the Fourier analysis processing is carried out continuously to time-series data supplied during arithmetic operation. In a period in which data temporarily stored in one buffer memory is being subjected to arithmetic operation processing, data supplied to the other buffer memory is fetched. When fetching of N data is terminated, the arithmetic operation and the data fetching processing may be switched to execute Fourier operation processing. However, in this case, two pairs of the buffer memories and FFT arithmetic operation processing means are required, which is not a favorable way in economic viewpoint.

Further, because this method employs block processing method, in which N supplied time-series data are handled in batch, a result of the Fourier transformation to the fetched N-point data is not outputted until N sampling time passes. As an analysis result obtained at that time, only a result of the Fourier transformation processing on every N samples is outputted.

That is, the result of the Fourier transformation on the newest N-point data containing data sampled successively and supplied cannot be outputted at real time. The Fourier transformation processing at every sampling period is necessary to output the result of the transformation at real time. However, if the Fourier transformation is carried out continuously at every sampling time interval, the amount of arithmetic operation per unit time is enormously increased, which is a not realistic method.

On the other hand, as a method for obtaining a result of continuous Fourier transformation processing, "Fourier transformation device and Fourier transformation method" has been proposed in Japanese Patent Application Laid-Open No. H1-59454.

This publication describes a method for Fourier-transforming a vibration waveform value sampled and supplied. According to the same method, a difference between a newly supplied vibration waveform value and an old vibration waveform value already supplied and used for Fourier transformation processing is obtained and a newer complex vibration value than the old complex vibration value provided by the arithmetic operation is obtained each time when a sampling value of the vibration waveform is supplied.

Although as an application capable of carrying out the Fourier transformation continuously, frequency analysis may be considered, if such application is taken into account, any frequency band is required to be analyzed at any resolution.

Japanese Patent Application Laid-Open No. H3-63875 has disclosed "A computation method for discrete Fourier transformation using cyclic technology", in which discrete Fourier transformation for carrying out energy spectrum calculation with an ultrasonic diagnosis apparatus is described. The same publication describes discrete Fourier transformation, which continuously computes using a sample data file by cyclic filter operation.

However, although this invention has described the method for achieving a circuit to be configured with complex data as input, it has not considered a cyclic Fourier transformation method having a simple structure, in which only real-part signals are supplied to transform signals supplied as time-series data for use in frequency analysis.

SUMMARY OF THE INVENTION

Accordingly, an object of the present invention is to provide a recursive discrete Fourier transformation device in which Fourier analysis is configured for supplied real-part signals in a simple way, and more particularly, a recursive discrete Fourier transformation device suitable for frequency analysis to be executed at any desired resolution in any desired frequency band.

To achieve the above object, there is provided a recursive discrete Fourier transformation device wherein data values $x(t)$, $x(t+1)$, $x(t+2)$, $x(t+3)$, ..., $x(t+N-1)$, $x(t+N)$ sampled at times $t$, $t+1$, $t+2$, $t+3$, ..., $t+N-1$, $t+N$ ($N$ is a positive integer which is 1 or more) each having an equal interval are supplied and as complex Fourier coefficients under degree $k$ ($k$ is 0 or a positive integer smaller than $N$) obtained by, with such $N$ data values supplied since time $t$ as a data stream, carrying out complex Fourier transformation on the data stream, a real part $X_r(k, t)$ and an imaginary part $X_i(k, t)$ are obtained, the discrete Fourier transformation device comprising: a first temporary storage means for storing the data stream $x(t)$, $x(t+1)$, $x(t+2)$, $x(t+3)$, ..., $x(t+N-1)$ supplied since time $t$ at time $t+N-1$ temporarily; a discrete Fourier operation means for obtaining the complex Fourier coefficients $X_r(k, t)$ and $X_i(k, t)$ of the data stream stored temporarily in the first storage means; and a second temporary storage means for storing the complex Fourier coefficients $X_r(k, t)$ and $X_i(k, t)$ obtained by the discrete Fourier operation means; the discrete Fourier operation means including: a subtracting portion for obtaining a data value of a difference between a data value $x(t+N)$ supplied at time $t+N$ and a data value $x(t)$ memorized temporarily in the first storage means; a constant multiplying portion for obtaining a signal with a predetermined amplitude by multiplying the obtained data value of the difference with a positive constant value $A$ for giving a predetermined amplitude; an adder portion for obtaining a summed signal by summing the signal with the predetermined amplitude obtained from the constant multiplying portion and one of the real part $X_r(k, t)$ and the imaginary part $X_i(k, t)$ of the complex Fourier coefficients stored temporarily in the second temporary storage means; and a basic function arithmetic processing portion for receiving the summed signal obtained from the adder portion and the other of the real part $X_r(k, t)$ and the imaginary part $X_i(k, t)$ of the complex Fourier coefficients stored temporarily by the second temporary storage means and carrying out an arithmetic operation on the received signals using a constant based on a basic frequency thereby to obtain the complex Fourier coefficients $X_r(k, t+1)$ and $X_i(k, t+1)$ at time $t+1$.

According to the present invention, data stream comprised of supplied $N$ samples is subjected to complex Fourier transformation and then, the oldest sample value used for complex Fourier transformation is subtracted from the value of a new sample to be supplied next so as to obtain a subtraction value. By deleting the oldest sample at the same time, discrete Fourier arithmetic operation result on new $N$ samples, which are renewed by each sample, can be obtained based on that subtraction value and the result of the complex Fourier operation. Thus, different from the conventional Fourier operation which is carried out after $N$ sample data is supplied, it is possible to configure a recursive Fourier transformation device, which obtains a result of fast Fourier operation on points $N$ so as to provide with an analysis resolution necessary in a sample period.

According to a preferred embodiment of the present invention, the positive constant value $A$ for providing with an amplitude corresponding to a difference between the $x(t+N)$ and the $x(t)$ can be set selectively with 1, square root of $N$ or $1/N$.

According to this embodiment, in addition to the above described effect, the operation can be carried out by FFT in which the positive constant value $A$ is set up by selecting appropriately 1, $N$ or a square root of $N$. This is employed in, for example, communication apparatus. In case where information signal to be transmitted is subjected to inverse fast Fourier transformation (IFFT) processing to be converted to time-series signal and that time-series signal is transmitted, according to Fourier operation method for obtaining information signal by supplying that transmitted signal to the FFT, which executes the FFT operation, the constant value A corresponding to the constant value **a**, which is, for example, 1, N or the square root of N used for the IFFT operation, is employed in the FFT operation processing circuit, so as to construct the FFT which operates in a complementary way with the IFFT to decode the information signal. By using the constant value A corresponding to the value **a**, used for the IFFT operation for a signal supplied from other mating system, a recursive Fourier transformation device having an excellent characteristic can be configured.

Further, to achieve the above object, there is provided a recursive discrete Fourier transformation device wherein datavaluesx(t), x(t+1), x(t+2), x(t+3), ..., x(t+N-1), x(t+N) sampled at times t, t+1, t+2, t+3, ..., t+N-1, t+N (N is a positive integer which is 1 or more) each having an equal interval are supplied and as complex Fourier coefficients under degree k (k is 0 or a positive integer smaller than N) obtained by, with such N data values supplied since time t as a data stream, carrying out complex Fourier transformation on the data stream, a real part $X_r(k, t)$ and an imaginary part $X_i(k, t)$ are obtained, the discrete Fourier transformation device comprising: a first temporary storage means for storing the data stream x(t), x(t+1), x(t+2), x(t+3), ..., x(t+N-1) supplied since time t at time t+N-1 temporarily; a discrete Fourier operation means for obtaining the complex Fourier coefficients $X_r(k, t)$ and $X_i(k, t)$ of the data stream stored temporarily in the first storage means; and a second temporary storage means for storing the complex Fourier coefficients $X_r(k, t)$ and $X_i(k, t)$ obtained by the discrete Fourier operation means, wherein the discrete Fourier operation means obtains complex Fourier coefficients $X_r(k, t)$ and $X_i(k, t)$ according to following equations.

$$X_r(k, t+1) = \left\{ X_r(k, t) + \frac{1}{A}[x(t+N) - x(t)] \right\} \times \cos\left[2\frac{\pi k}{N}\right] + X_i(k, t)\sin\left[2\frac{\pi k}{N}\right]$$

$$X_i(k, t+1) = X_i(k, t)\cos\left[2\frac{\pi k}{N}\right] - \left\{ X_r(k, t) + \frac{1}{A}[x(t+N) - x(t)] \right\}\sin\left[2\frac{\pi k}{N}\right]$$

Where, A is a positive constant value for providing [x(t+N)-x(t)] with an amplitude.

According to the present invention, data stream comprised of suppliedN samples is subjected to complex Fourier transformation and then, by carrying out arithmetic operation according to a predetermined equation based on a value of a new sample supplied next, the oldest sample value used for complex Fourier transformation and a result of the already obtained complex Fourier operation result, discrete Fourier operation result on new N samples, which are renewed by each sample, can be obtained. Thus, different from the conventional Fourier operation which is carried out after N sample data are supplied, it is possible to configure a recursive Fourier transformation device, which obtains a result of fast Fourier operation on points N so as to provide with an analysis resolution necessary in a sample period.

According to a preferred embodiment of the present invention, the positive constant value A for providing with an amplitude corresponding to a difference between the x(t+N) and the x(t) is capable of being set selectively with 1, square root of N or 1/N.

Further, to achieve the above object, there is provided a recursive discrete Fourier transformation device wherein datavaluesx(t),x(t+1),x(t+2),x(t+3), ..., x(t+N-1), x(t+N) sampled at times t, t+1, t+2, t+3, ..., t+N-1, t+N (N is a positive integer which is 1 or more) each having an equal interval are supplied and with such N data values supplied since time t as a data stream, complex Fourier transformation is carried out to the data stream using a plurality of degrees k (k is 0 or a positive integer smaller than N) so as to obtain real parts $X_r(k, t)$ and imaginary parts $X_i(k, t)$ as plural sets of complex Fourier coefficients, the discrete Fourier transformation device comprising: a first temporary storage means for storing the data stream x(t), x(t+1), x(t+2), x(t+3), ..., x(t+N-1) supplied since time t at time t+N-1 temporarily; plural discrete Fourier operation means for obtaining the complex Fourier coefficients $X_r(k, t)$ and $X_i(k, t)$ for the data stream stored temporarily in the first storage means for each of plural k values; and a second temporary storage means for storing each set of the complex Fourier coefficients $X_r(k, t)$ and $X_i(k, t)$ obtained by the plural discrete Fourier operation means corresponding to each k value, the discrete Fourier operation means including: a subtracting portion for obtaining a data value of a difference between a data value x(t+N) supplied at time t+N and a data value x(t) memorized temporarily in the first storage means; a constant multiplying portion for obtaining a signal with a predetermined amplitude by multiplying the data value of the difference obtained by the subtracting portion with a positive constant value A for giving a predetermined amplitude; an adder portion for obtaining a summed signal by summing the signal with the predetermined amplitude obtained from the constant multiplying portion and one of a real part $X_r(k, t)$ and an imaginary part (k, t) of the complex Fourier coefficients stored temporarily by the second temporary storage means; and a basic function arithmetic processing portion for receiving the summed signal obtained from the adder portion and the other of the real part $X_r(k, t)$ and the imaginary part $X_i(k, t)$ of the complex Fourier coefficients stored temporarily in the second temporary storage means and carrying out an arithmetic operation on the received signals using a constant based on a basic frequency thereby to obtain complex Fourier coefficients $X_r(k, t+1)$ and $X_i(k, t+1)$ at time t+1.

According to the present invention, data stream comprised of supplied N samples is subjected to complex Fourier transformation in terms of plural basic frequencies and then, the oldest sample value used for complex Fourier transformation is subtracted from the value of a new sample to be supplied next so as to obtain a subtraction value. By deleting the oldest sample at the same time, discrete Fourier operation result on new N samples, which are renewed by each sample, can be obtained based on that subtraction value and the result of the complex Fourier operation in terms of plural basic frequencies. Thus, different from the conventional Fourier operation which is carried out after N sample data is supplied, it is possible to configure a recursive Fourier transformation device, which is operated fast to obtain a result of Fourier operation in terms of plural basic frequencies within a sample period.

According to a preferred embodiment of the present invention, the quantity of the degrees k is N.

According to this embodiment, in addition to the above-described effect, a recursive Fourier transformation device, which is operated fast so as to obtain a result of Fourier operation for all N basic frequencies, can be configured.

According to a preferred embodiment of the present invention, the positive constant value A for providing with an amplitude corresponding to a difference between the x(t+N) and the x(t) is capable of being set selectively with 1, square root of N or 1/N.

Further, to achieve the above object, there is provided a recursive discrete Fourier transformation device wherein datavaluesx(t),x(t+1),x(t+2), x(t+3), ..., x(t+N-1), x(t+N) sampled at times t, t+1, t+2, t+3, ..., t+N-1, t+N (N is a positive integer which is 1 or more) each having an equal interval are supplied and with such N data values supplied since time t as a data stream, complex Fourier transformation is carried out to the data stream using a plurality of degrees k (k is 0 or a positive integer smaller than N) so as to obtain real parts $X_r(k, t)$ and imaginary parts $X_i(k, t)$ as plural sets of complex Fourier coefficients, the discrete Fourier transformation device comprising: a first temporary storage means for storing the data stream x(t), x(t+1), x(t+2), x(t+3), ..., x(t+N-1) supplied since time t at time t+N-1 temporarily; plural discrete Fourier operation means for obtaining the complex Fourier coefficients $X_r(k, t)$ and $X_i(k, t)$ for the data stream stored temporarily in the first storage means for each k value; and a second temporary storage means for storing each set of complex Fourier coefficients $X_r(k, t)$ and $X_i(k, t)$ obtained by the plural discrete Fourier operation means corresponding to each k value, the discrete Fourier operation means including: a common subtracting portion for obtaining a data value of a difference between a data value x(t+N) supplied at time t+N and a data value x(t) memorized temporarily in the first storage means; a common constant multiplying portion for obtaining a signal with a predetermined amplitude by multiplying the data value of the difference obtained by the common subtracting portion with a positive constant value A for giving a predetermined amplitude; an adder portion for obtaining a summed signal by summing the signal with the predetermined amplitude obtained from the common constant multiplying portion and one of a real part $X_r(k, t)$ and an imaginary part (k, t) of the complex Fourier coefficients stored temporarily in the second temporary storage means; and a basic function arithmetic processing portion for receiving the summed signal obtained from the adder portion and the other of the real part $X_r(k, t)$ and the imaginary part $X_i(k, t)$ of the complex Fourier coefficients stored temporarily in the second temporary storage means and carrying out an arithmetic operation on the received signals using a constant based on a basic frequency thereby to obtain the complex Fourier coefficients $X_r(k, t+1)$ and $X_i(k, t+1)$ at time t+1.

According to the present invention, data stream comprised of supplied N samples is subjected to complex Fourier transformation in terms of plural basic frequencies and then, the oldest sample value used for complex Fourier transformation is subtracted from the value of a new sample to be supplied next so as to obtain a subtraction value. By deleting the oldest sample at the same time, discrete Fourier operation result on new N samples, which are renewed by each sample, can be obtained based on that subtraction value and the result of the complex Fourier operation in terms of plural basic frequencies. At this time, the first primary storage means, subtracting portion and constant multiplying portion can be used in common. Thus, different from the conventional Fourier operation which is carried out after N sample data is supplied, a recursive Fourier transformation device, which is operated fast to obtain a result of Fourier operation in terms of plural basic frequencies within a sample period, can be configured.

According to a preferred embodiment of the present invention, the quantity of the degrees k is N.

According to a preferred embodiment of the present invention, the positive constant value A for providing with an amplitude corresponding to a difference between the x(t+N) and the x(t) is capable of being set selectively with 1, square root of N or 1/N.

Further, to achieve the above object, there is provided a recursive discrete Fourier transformation device wherein datavaluesx(t),x(t+1),x(t+2),x(t+3), ..., x(t+N-1), x(t+N) sampled at times t, t+1, t+2, t+3, ..., t+N-1, t+N (N is a positive integer which is 1 or more) each having an equal interval are supplied and as a complex Fourier coefficient under degree k (k is 0 or a positive integer smaller than N) obtained by, with such N data values supplied since time t as a data stream, carrying out complex Fourier transformation on the data stream, a real part $X_r(k, t)$ and an imaginary part $X_i(k, t)$ are obtained, the discrete Fourier transformation device comprising: a data updating means for obtaining a first subtraction signal by subtracting data x(t) supplied before N sampling period from data x(t+N) supplied at time t+N; a recursive processing means for obtaining a new second subtraction signal by subtracting an addition signal generated recursively using an already generated second subtraction signal from the obtained first subtraction signal; and a multiplying means for obtaining the real part $X_r(k, t)$ of the Fourier coefficients by summing up a signal obtained by multiplying the new second subtraction signal obtained by the recursive processing means with a first constant value and a signal obtained by multiplying the second subtraction signal supplied before a sampling period with a second constant value and for obtaining the imaginary part $X_i(k, t)$ of the Fourier coefficients by multiplying the new second subtraction signal with a third constant value, wherein the addition signal generated recursively by the recursive processing means is a signal obtained by summing up a signal obtained by multiplying the second subtraction signal obtained before a sampling period with a fourth constant value and the second subtraction signal obtained before two sampling periods.

According to the present invention, data stream comprised of supplied N samples is subjected to complex Fourier transformation and then, the oldest sample value used for complex Fourier transformation is subtracted from the value of a new sample to be supplied next so as to obtain a subtraction value. By deleting the oldest sample at the same time, discrete Fourier operation result on new N samples, which are renewed by each sample, can be obtained based on that subtraction value and the result of the complex Fourier operation. Thus, different from the conventional Fourier operation which is carried out after N sample data is supplied, a recursive Fourier transformation device, which obtains a result of fast Fourier arithmetic operation on points N so as to provide with an analysis resolution necessary in a sample period can be configured.

Further, to achieve the above object, there is provided a recursive discrete Fourier transformation device wherein data values x(t), x(t+1), x(t+2), x(t+3), ..., x(t+N-1), x(t+N) sampled at times t, t+1, t+2, t+3, ..., t+N-1, t+N (N is a positive integer which is 1 or more) each having an equal interval are supplied and as a complex Fourier coefficient under degree k (k is 0 or a positive integer smaller than N) obtained by, with such N data values supplied since time t as a data stream, carrying out complex Fourier transformation on the data stream, a real part $X_r(k, t)$ and an imaginary part $X_i(k, t)$ are obtained, the discrete Fourier transformation device comprising: a data updating means for obtaining a first subtraction signal by subtracting data x(t) supplied before N sampling period from data x(t+N) supplied at time t+N; a recursive processing means for obtaining a new second subtraction signal by subtracting an addition signal generated recursively using an already generated second subtraction signal from the obtained first subtraction signal ; and a multiplying means for obtaining the real part $X_r(k, t)$ of the Fourier coefficients by summing up a signal obtained by multiplying the new second subtraction signal obtained by the recursive processing means with a first constant value and a signal obtained by multiplying the second subtraction signal supplied before a sampling period with the second constant and for obtaining the imaginary part $X_i(k, t)$ of the Fourier coefficients by multiplying the new second subtraction signal with a third constant value, wherein a transfer function H(Z) for the data updating means, the recursive processing means and the multiplying means connected as subsidiary components is given according to a following equation.

$$H(z) = A(1 - z^{-N}) \left\{ \frac{\cos\left[2\frac{\pi k}{N}\right] - j \sin\left[2\frac{\pi k}{N}\right] - z^{-1}}{1 - 2\cos\left[2\frac{\pi k}{N}\right] z^{-1} + z^{-2}} \right\}$$

where A is a positive constant value for providing [x(t+N)-x(t)] with an amplitude.

According to the present invention, data stream comprised of supplied N samples is subjected to complex Fourier transformation and then, by carrying out arithmetic operation according to a predetermined equation based on a value of a new sample supplied next, the oldest sample value used for complex Fourier transformation and a result of the already obtained complex Fourier operation result, discrete Fourier operation result on new N samples, which are renewed by each sample, can be obtained. Thus, different from the conventional Fourier operation which is carried out after N sample data is supplied, a recursive Fourier transformation device, which obtains a result of fast Fourier arithmetic operation on points N so as to provide with an analysis resolution necessary in a sample period can be configured.

According to a preferred embodiment of the present invention, the positive constant value A for providing with an amplitude corresponding to a difference between the x(t+N) and the x(t) is capable of being set selectively with 1, an inverse number of square root of N or 1/N.

According to this embodiment, in addition to the above described effect, the operation can be carried out by FFT in which the positive constant value A is set up by selecting appropriately 1, N or an inverse number of square root of N. This is employed in, for example, communication apparatus. In case where information signal to be transmitted is subjected to inverse fast Fourier transformation (IFFT) processing to be converted to time-series signal and that time-series signal is transmitted, in Fourier operation method for obtaining information signal by supplying that transmitted signal to the FFT for executing the FFT operation, the constant value A corresponding to the constant value **a**, which is, for example, 1, N or an inverse number of the square root of N used for the IFFT operation, is employed in the FFT operation processing circuit, so as to construct the FFT which operates in a complementary way with the IFFT to decode the information signal. By using the constant value A corresponding to the value **a** used for the IFFT operation for a signal supplied from other mating system, a recursive Fourier transformation device having an excellent characteristic can be configured.

Further, to achieve the above object, there is provided a recursive discrete Fourier transformation device wherein datavaluesx(t), x(t+1), x(t+2), x(t+3), ..., x(t+N-1), x(t+N) sampled at times t, t+1, t+2, t+3, ..., t+N-1, t+N (N is a positive integer which is 1 or more) each having an equal interval are supplied and with such N data values supplied since time t as a data stream, complex Fourier transformation is carried out to the data stream using a plurality of degrees k (k is 0 or a positive integer smaller than N) so as to obtain real parts $X_r(k, t)$ and imaginary parts $X_i(k, t)$ as plural sets of complex Fourier coefficients, the discrete Fourier transformation device comprising: plural data updating means corresponding to the plurality of degrees k, for obtaining a first subtraction signal by subtracting data x(t) supplied before N sampling period from data x(t+N) supplied at time t+N; plural recursive processing means corresponding to the plurality of degrees k, for obtaining a new second subtraction signal by subtracting an addition signal generated recursively using an already generated second subtraction signal from the obtained first subtraction signal; and plural multiplying means corresponding to the plurality of degrees k, for obtaining a real part $X_r(k, t)$ of the Fourier coefficients by summing up a signal obtained by multiplying the new second subtraction signal obtained by the recursive processing means with a first constant value and a signal obtained by multiplying the second subtraction signal supplied before a sampling period with the second constant and for obtaining an imaginary part $X_i(k, t)$ of the Fourier coefficients by multiplying the new second subtraction signal with a third constant value, wherein the addition signal generated recursively by each of the plural recursive processing means is a signal obtained by summing up a signal obtained by multiplying the second subtraction signal obtained before a sampling period with a fourth constant value corresponding to each degree k, and the second subtraction signal obtained before two sampling periods.

According to the present invention, data stream comprised of supplied N samples is subjected to complex Fourier transformation in terms of plural basic frequencies and then, the oldest sample value used for complex Fourier transformation is subtracted from the value of a new sample to be supplied next so as to obtain a subtraction value. By deleting the oldest sample at the same time, discrete Fourier operation result on new N samples, which are renewed by each sample, can be obtained based on that subtraction value and the result of the complex Fourier operation in terms of plural basic frequencies. Thus, different from the conventional Fourier operation which is carried out after N sample data is supplied, a recursive Fourier transformation device, which is operated fast to obtain a result of Fourier operation in terms of plural basic frequencies within a sample period, can be configured.

According to a preferred embodiment of the present invention, the quantity of the degrees k is N.

According to this embodiment, in addition to the above described effect, a recursive Fourier transformation device, which is operated fast so as to obtain a result of Fourier operation for all N basic frequencies, can be configured.

Further, to achieve the above object, there is provided a recursive discrete Fourier transformation device wherein datavaluesx(t),x(t+1), x(t+2),x(t+3), ..., x(t+N-1), x(t+N) sampled at times t, t+1, t+2, t+3, ..., t+N-1, t+N (N is a positive integer which is 1 or more) each having an equal interval are supplied, data x(t) supplied before N sampling period is subtracted from data x(t+N) supplied at time t+N so as to obtain a first subtraction signal, and with such N data values supplied since time t as a data stream based on the obtained first subtraction signal, a complex Fourier transformation is carried out to the data stream using a plurality of degrees k (k is 0 or a positive integer smaller than N) so as to obtain real parts $X_r(k, t)$ and imaginary parts $X_i(k, t)$ as plural sets of complex Fourier coefficients, the discrete Fourier transformation device comprising: plural recursive processing means corresponding to the plurality of degrees k, for obtaining a new second subtraction signal by subtracting an addition signal generated recursively using an already generated second subtraction signal from the obtained first subtraction signal; and plural multiplying means corresponding to the plurality of degrees k, for obtaining a real part $X_r(k, t)$ of the Fourier coefficients by summing up a signal obtained by multiplying the new second subtraction signal obtained by the recursive processing means with a first constant value and a signal obtained by multiplying the second subtraction signal supplied before a sampling period with the second constant and for obtaining an imaginary part $X_i(k, t)$ of the Fourier coefficients by multiplying the new second subtraction signal with a third constant value, wherein the addition signal generated recursively by each of the plural recursive processing means is a signal obtained by summing up a signal obtained by multiplying the second subtraction signal obtained before a sampling period with a fourth constant value corresponding to each degree k, and the second subtraction signal obtained before two sampling periods.

According to a preferred embodiment of the present invention, the quantity of the degrees k is N.

The nature, principle and utility of the invention will become more apparent from the following detailed description when read in conjunction with the accompanying drawings.

BRIEF DESCRIPTION OF THE DRAWINGS

In the accompanying drawings:

Fig.1 is a diagram showing schematically a recursive discrete Fourier transformation device according to a first embodiment of the present invention;

Fig.2 is a diagram showing schematically a relation between data value obtained by sampling the waveform of signal supplied to the recursive discrete Fourier transformation device of the first embodiment of the present invention and a corresponding DFT operation;

Fig.3 is a diagram showing the structure of the recursive discrete Fourier transformation device according to the first embodiment of the present invention;

Fig.4 is a diagram showing in detail the structure of the recursive discrete Fourier transformation device according to the first embodiment of the present invention;

Fig.5 is a diagram showing the structure of the recursive discrete Fourier transformation device which computes Fourier coefficient with respect to basic frequency of N points according to the first embodiment of the present invention;

Fig.6 is a diagram showing the structure of the recursive discrete Fourier transformation device which computes Fourier coefficient with respect to basic frequency of N points according to the first embodiment of the present invention;

Fig.7 is a diagram showing a schematic structure of the recursive discrete Fourier transformation device according to a second embodiment of the present invention;

Fig.8 is a diagram showing the structure of the recursive discrete Fourier transformation device which carries out arithmetic operation using a transfer function according to the second embodiment of the present invention;

Fig.9 is a diagram showing other structure of the recursive discrete Fourier transformation device which carries out arithmetic operation using a transfer function according to the second embodiment of the present invention; and

Fig.10 is a diagram showing the structure of the recursive discrete Fourier transformation device which computes Fourier coefficient with respect to the basic frequency of N points according to the second embodiment of the present invention.

DESCRIPTION OF THE PREFERRED EMBODIMENTS

Hereinafter, the preferred embodiment of the recursive discrete Fourier transformation device will be described with reference to the accompanying drawings.

<First Embodiment>

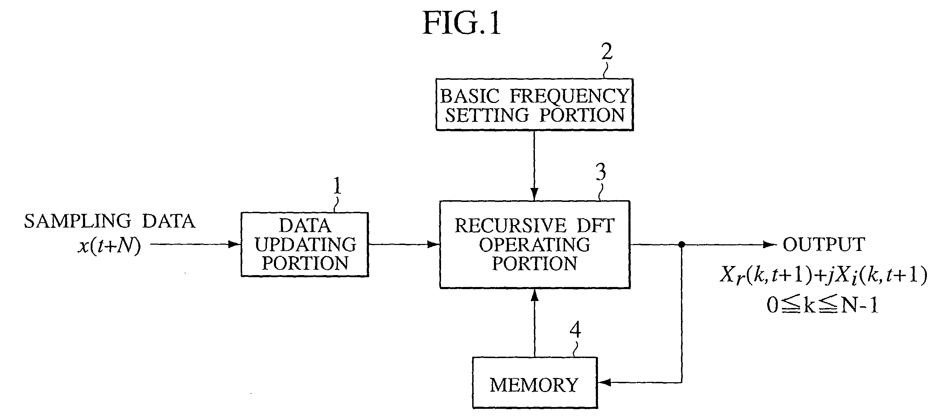

Fig. 1 shows schematically the structure of the recursive discrete Fourier transformation device according to the first embodiment of the present invention, which will be described with the same Figure.

The recursive discrete Fourier transformation device comprises a data updating portion 1 to which data sampled in a predetermined time interval is supplied and which stores temporarily supplied new N (N: positive integer) data therein, a basic frequency setting portion 2 in which the basic frequency for carrying out the discrete Fourier transformation is set up, a recursive DFT operating portion 3 for carrying out recursive DFT operation, and a memory 4 for storing temporarily computed data.

Next, an operation of the recursive discrete Fourier transformation device having such a structure will be described.

First, supplied data is sampled with a sampling circuit (not shown) every predetermined time interval and then, the sampled and quantitized discrete data is supplied to the data updating portion 1.

The sampling circuit samples data values supplied at every time of a predetermined interval, t, t+1, t+2, t+3, ..., t+N-1, t+N (N: natural number) and generates data streams x(t), x(t+1), x(t+2), x(t+3), ..., x(t+N-1), x(t+N) by converting the data values supplied at the respective times to sampling values corresponding to the respective times.

The operation of the sampling circuit is the same as that of an A/D converter which converts supplied analog signal to digital signal, converting an analog signal voltage value supplied at a predetermined time interval, given in the form of an inverse number of a sampling frequency, to a digital signal value. The converted digital signal value is a voltage having an analogous relation with an analog voltage, which gives a pulse amplitude modulation signal or that voltage value is expressed with a binary digital value.

In this manner, sampling data x(t) sampled at time t, x(t+1) sampled at time t+1, ..., x(t+N-1) sampled at t+N-1, x(t+N) sampled at time t+N, ..., are supplied to the data updating portion 1.

The data-updating portion 1 updates the newest N data (N: positive integer) of the supplied data, and stores them temporarily.

That is, data supply is started from x(t) and when data x(t+1), x(t+2), x(t+3) are supplied, all the supplied data x(t), x(t+1), x(t+2), x(t+3) are stored temporarily. This temporary storage operation is continued until data x(t+N-1) is entered and when data x(t+N-1) is entered, the total data number becomes N, so that data region of the data updating portion becomes full.

When next data x(t+N) is supplied with such a condition, the total data number becomes N+1. Thus, the data updating portion 1 subtracts x(t) from x(t+N) and then supplies data obtained by that subtraction to the recursive DFT operating portion 3 while removing the oldest data x(t) from the memory portion. Consequently, the data updating portion 1 temporarilystoresNdatax(t+1),x(t+2),x(t+3), ..., x(t+N-1), x(t+N).

Likewise, when next data x(t+N+1) is supplied, the data updating portion 1 obtains x(t+N+1)-x(t+1) and supplies it to the recursive DFT operating portion 3 while removing x(t+1) from the memory. Consequently, the newest N data among supplied data is always stored in the data-updating portion 1 temporarily.

Such temporarily stored N data is supplied to the recursive DFT operating portion 3 and a last FFT operation result stored temporarily in the memory 4 is supplied to the recursive DFT operating portion 3 as recursive data. Then, the recursive DFT operating portion 3 carries out recursive discrete Fourier transformation based on a method described later, according to frequency resolution information set up by the basic frequency setting portion 2 and outputs a result of the operation.

Next, this recursive discrete Fourier transformation operation method will de described in detail with reference to a conventional Fourier operation as well.

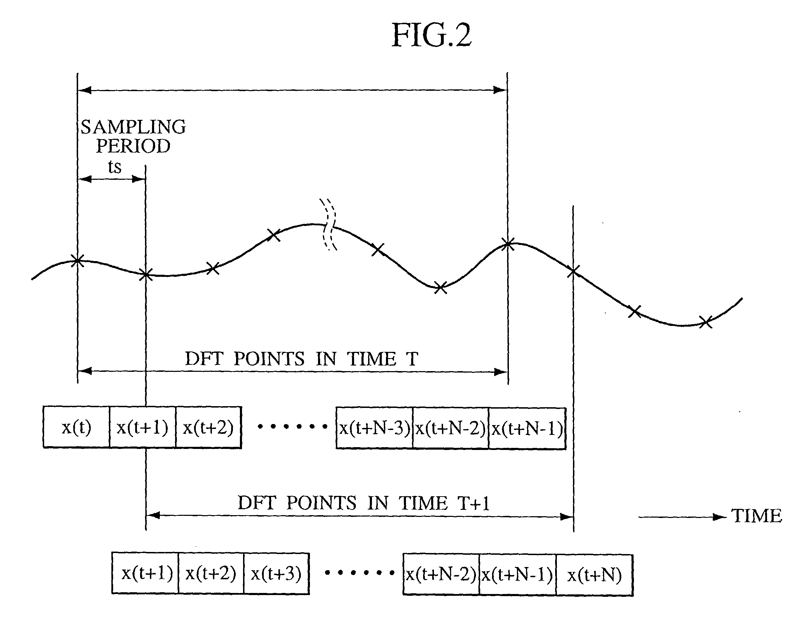

Fig.2 explains schematically a relation between data value obtained by sampling the waveform of supplied signal in a sampling period ts and corresponding DFT operation.

The same Figure shows a set of N real number data values x(t), x(t+1), x(t+2), x(t+3), ..., x(t+N-1)sampled in a predetermined sampling period from time t and a set of N real number data values x(t+1), x(t+2), x(t+3), ..., x(t+N-1), x(t+N) sampled from time t+1.

Then, the value X(k, t) of discrete Fourier transformation obtained with respect to data stream which is N real number data values sampled since time t is defined in the following expression.

$$X(k,t) = \frac{1}{\sqrt{N}} \sum_{n=t}^{t+N-1} x(n) \exp\left[-j2(n-t)\frac{\pi k}{N}\right] \qquad \cdots (2)$$

$$= \frac{1}{\sqrt{N}} \sum_{n=t}^{t+N-1} x(n) \cos\left[2(n-t)\frac{\pi k}{N}\right] - j\frac{1}{\sqrt{N}} \sum_{n=t}^{t+N-1} x(n) \sin\left[2(n-t)\frac{\pi k}{N}\right]$$

$$= X_r(k,t) - jX_i(k,t)$$

$$\text{for } k = 0, 1, \ldots, N-1$$

Transformation of real part $X_r(k, t)$ and imaginary part $X_i(k, t)$ of complex Fourier transformation of sampling data stream x(t) - x(t+N-1) supplied since arbitrary time t is defined as follows.

$$X_r(k,t) = \frac{1}{\sqrt{N}} \sum_{n=t}^{t+N-1} x(n)\cos\left[2(n-t)\frac{\pi k}{N}\right] \qquad \cdots (3)$$

$$X_i(k,t) = \frac{1}{\sqrt{N}} \sum_{n=t}^{t+N-1} x(n)\sin\left[2(n-t)\frac{\pi k}{N}\right] \qquad \cdots (4)$$

$$\text{for } k = 0, 1, \ldots, N-1$$

The transformation equation for the sampling data supplied since time t is defined in the above manner. Next, a transformation equation for a sampling data stream to be supplied since time t+1 will be described below.

That is, the sampling data stream supplied since the time t+1 is expressed as a set of x(t+1), x(t+2), x(t+3), ..., x(t+N-1), x(t+N). Because data x(t) is deleted from data stream supplied since time t while new data is added, transformation of the real part is expressed in a following equation (5) and that expressed equation (5) is developed as follows.

$$X(k,t+1) = \frac{1}{\sqrt{N}} \sum_{n=t+1}^{t+N} x(n)\cos\left[2(n-t-1)\frac{\pi k}{N}\right] \qquad \cdots (5)$$

$$= \frac{1}{\sqrt{N}} \left\{ \sum_{n=t+1}^{t+N} x(n)\cos\left[2(n-t)\frac{\pi k}{N}\right]\cos\left[2\frac{\pi k}{N}\right] + \sum_{n=t+1}^{t+N} x(n)\sin\left[2(n-t)\frac{\pi k}{N}\right]\sin\left[2\frac{\pi k}{N}\right] \right\}$$

$$= Y_r(k,t+1)\cos\left[2\frac{\pi k}{N}\right] + Y_i(k,t+1)\sin\left[2\frac{\pi k}{N}\right]$$

where,

$$Y_r(k,t+1) = \frac{1}{\sqrt{N}} \sum_{n=t+1}^{t+N} x(n)\cos\left[2(n-t)\frac{\pi k}{N}\right] \qquad \cdots (6)$$

$$Y_i(k,t+1) = \frac{1}{\sqrt{N}} \sum_{n=t+1}^{t+N} x(n)\sin\left[2(n-t)\frac{\pi k}{N}\right] \qquad \cdots (7)$$

Then, if x(t) which is the oldest data is deleted and x(t+N) which is the newest data is incorporated, a Fourier coefficient $Y_r(k, t+1)$ can be expressed with Fourier coefficient $X_r(k, t)$ and likewise, $Y_i(k, t+1)$ can be expressed with $X_i(k, t)$.

As a result, the equations (6), (7) are expressed as follows.

$$Y_r(k,t+1) = X_r(k,t) + \frac{1}{\sqrt{N}}\left[x(t+N) - x(t)\right] \qquad \cdots (8)$$

$$Y_i(k,t+1) = X_i(k,t) \qquad \cdots (9)$$

Next, the transformation equation for the imaginary part is also developed in the same way.

That is, when new data x(t+N) is supplied, the transformation of the imaginary part is also developed as shown in a following equation.

$$X_i(k,t+1) = \frac{1}{\sqrt{N}} \sum_{n=t+1}^{t+N} x(n) \sin\left[2(n-t-1)\frac{\pi k}{N}\right] \qquad \cdots (10)$$

$$= \frac{1}{\sqrt{N}}\left\{ \sum_{n=t+1}^{t+N} x(n) \sin\left[2(n-t)\frac{\pi k}{N}\right]\cos\left[2\frac{\pi k}{N}\right] - \sum_{n=t+1}^{t+N} x(n)\cos\left[2(n-t)\frac{\pi k}{N}\right]\sin\left[2\frac{\pi k}{N}\right] \right\}$$

$$= Y_i(k,t+1)\cos\left[2\frac{\pi k}{N}\right] - Y_r(k,t+1)\sin\left[2\frac{\pi k}{N}\right]$$

Therefore, the equations (5), (10) can be expressed based on the relation of the equations (8), (9).

$$X_i(k,t+1) = \left\{ X_r(k,t) + \frac{1}{\sqrt{N}}[x(t+N) - x(t)] \times \cos\left[2\frac{\pi k}{N}\right] + X_i(k,t)\sin\left[2\frac{\pi k}{N}\right] \right\} (11)$$

$$X_i(k,t+1) = X_i(k,t)\cos\left[2\frac{\pi k}{N}\right] - \left\{ X_r(k,t) + \frac{1}{\sqrt{N}}[x(t+N) - x(t)] \right\}\sin\left[2\frac{\pi k}{N}\right] (12)$$

In this way, the discrete Fourier transformation at time t+1 can be executed according to the equations (11), (12) by using the result of the discrete Fourier arithmetic operation at time t recursively and further using data value which is a difference between newly fetched sample value x(t+N) and a sample value x(t) to be deleted.

Although the discrete Fourier transformation obtained here is FIR filter (acyclic digital filter) which originally carries out processing for finite sample number N, the discrete Fourier transformation at current sampling time is realized using IIR filter (cyclic digital filter), which introduces the discrete Fourier transformation using a result of the discrete Fourier transformation obtained at a previous sampling time, as evident from the aforementioned equations (11), (12).

According to the method for achieving this DFT with the IIR filter, the hardware configuration for arithmetic operation can be made simpler than constructing the DFT with the FIR filter. Thus, if the recursive discrete Fourier transformation expressed with the aforementioned transformation equation is carried out, it is possible to supply new sampled data successively at every sampling time interval shown in Fig.2 and carry out high efficiency Fourier transformation to the newest data stream containing new data values.

In this way, the Fourier operation is enabled using the basic frequency expressed with cos(2πk/N) and sin cos(2πk/N). If the basic frequency is assumed to be Γc, Γs and 1/(square root of N) indicating the amplitude is assumed to be A, the equations (11), (12) are expressed as follows.

$$X_r(k,t+1) = \left\{ X_r(k,t) + A[x(t+N) - x(t)] \right\}\Gamma c + X_i(k,t)\Gamma s \qquad \cdots (13)$$

$$X_i(k, t+1) = X_i(k,t)\Gamma c - \{X_r(k,t) + A[x(t+N) - x(t)]\}\Gamma s \qquad \cdots \quad (14)$$

Where,

$$\Gamma c = \cos\left[2\frac{\pi k}{N}\right], \quad \Gamma s = \sin\left[2\frac{\pi k}{N}\right], \quad A = \frac{1}{\sqrt{N}}$$

In this way, the Fourier transformation operation is enabled using the equations (13), (14). Next, the structure of the recursive discrete Fourier transformation device, which achieves this, will be described.

That is, the equation (13) indicates that the real part $X_r(k, t+1)$ of Fourier coefficient at time t+1 can be obtained at object basic frequencies $\Gamma c$, $\Gamma s$ by using data x(k, t+N), x(k, 1) supplied at time t+N and time t and real part $X_r(k, t)$ and imaginary part $X_i(k, t)$ of Fourier coefficient obtained at time t recursively.

Then, the equation (14) indicates that the imaginary part $X_i(k, t+1)$ of Fourier coefficient at time t+1 can be obtained. Next, a recursive discrete Fourier transformation device, which operates corresponding to these arithmetic operation equations, will be described.

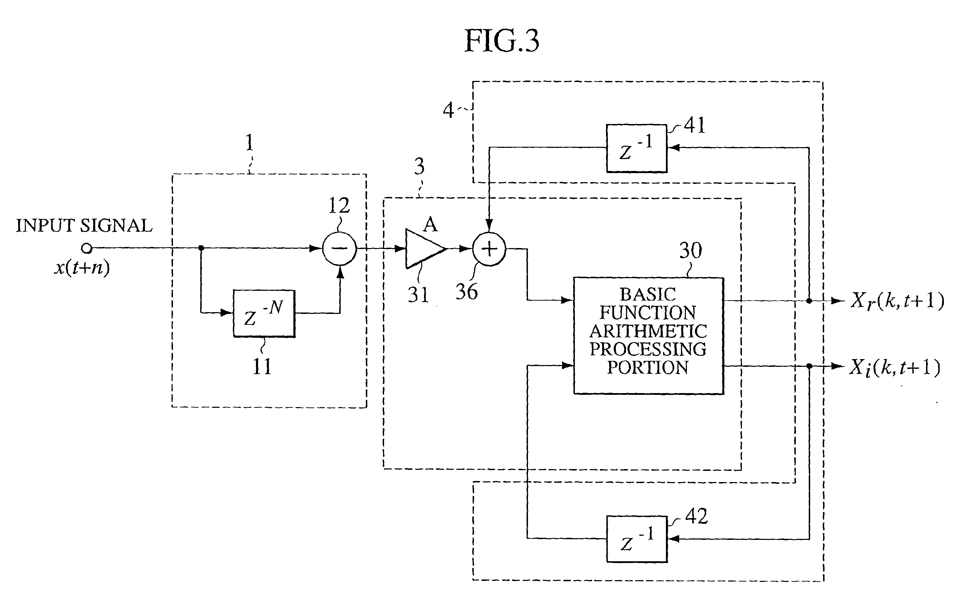

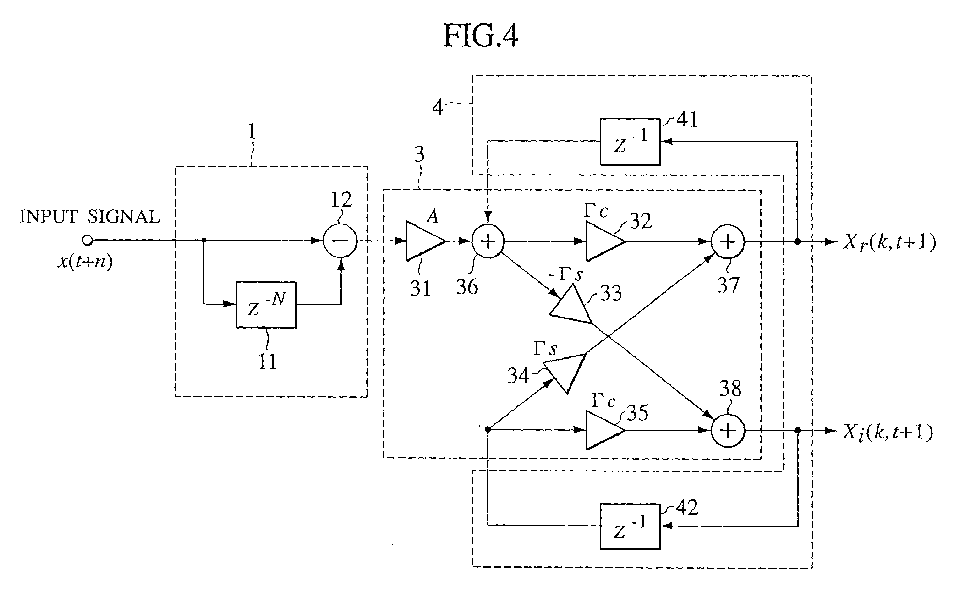

Fig.3 is a recursive discrete Fourier transformation circuit composing major components of the recursive discrete Fourier transformation device and Fig.4 is a diagram showing the basic function arithmetic processing portion 30 further in detail. The recursive discrete Fourier transformation device will be explained with reference to these Figures.

Referring to Fig.4, the recursive discrete Fourier transformation circuit comprises a delay circuit 11 and a subtractor 12, which compose a data updating portion 1, a plurality of multipliers 31-35, which compose a recursive DFT operating portion 3, a plurality of adders 36-38 and delay circuits 41, 42 which compose a memory portion 4.

Next, an operation of the recursive discrete Fourier transformation circuit having such a structure will be described.

First, supplied input signals are sampled at times x(t), x(t+1), x(t+2), x(t+3), ..., x(t+N-1), x(t+N) (N is a natural number) with an equal interval by a sampling circuit (not shown) and then, discrete data that input signal levels at those times are gathered in the form of data stream x(t), x(t+1), x(t+2), x(t+3), ..., x(t+N-1), x(t+N) as sampling values are supplied to the data updating portion 1.

In the data updating portion 1, one part of supplied data is supplied to a delay unit 11 while other part is supplied to the subtractor 12. The delay unit 11 delays a signal by a time corresponding to the period of N sampling clocks.

That is, the delay unit 11 has a function for updating N data supplied newly while storing them temporarily.

Here, data supply is started from x(t) and when data x(t+1), x(t+2), x(t+3) are supplied, the delay unit 11 stores all the supplied data x(t), x(t+1), x(t+2), x(t+3) temporarily. This temporary storage operation is continued until data x(t+N-1) is entered and when data x(t+N-1) is entered, the total data number becomes N, so that data region of the data updating portion becomes full.

Because, when next data x(t+N) is supplied under this condition, total data quantity is N+1, the delay unit 11 supplies the oldest data x(t) to the subtractor 12 and the subtractor 12 subtracts that oldest data x(t) from supplied data x(t+N). Then, [x(t+N)-x(t)] obtained by the subtraction is supplied to the recursive DFT operating portion 3.

The recursive DFT operating portion 3 carries out multiplication and addition of such supplied signals.

First, the multiplier 31 multiplies the supplied signal [x(t+N)-x(t)] with the aforementioned constant **A** and the multiplied signal is supplied to the adder 36.

A signal supplied from the multiplier 31 and a signal obtained by delaying the real part of an output signal from the recursive discrete Fourier operation circuit by a sampling period by the delay unit 41 are supplied to the adder 36 so that they are summed up and that summed signal is supplied to the multipliers 32, 33.

In one multiplier 32, the supplied signal is multiplied with the basic frequency $\Gamma c = \cos(2\pi k/N)$ and then, a signal obtained by the multiplication is supplied as an input signal to the adder 37. In another multiplier 33, the supplied signal is multiplied with the basic frequency $-\Gamma s = -\sin(2\pi k/N)$ and a signal obtained by that multiplication is supplied as one input signal to the adder 38.

In other input signal to be supplied to the aforementioned adder 37, the imaginary part of an output signal from this recursive discrete Fourier operation circuit is delayed by a sampling period by the delay unit 42 and then the signal is multiplied with $\Gamma s = \sin(2\pi k/N)$ by the multiplier 34. In other input signal to be supplied to the aforementioned adder 38, other part of a signal delayed by a sampling period by the delay unit 42 is multiplied with $\Gamma c = \cos(2\pi k/N)$ by the multiplier 35.

Such summed signal by the adder 37 is supplied as real part signal $X_r(k, t+1)$ of an output signal from the recursive discrete Fourier operation circuit and part of the signal is supplied to the delay circuit 41 as a recursive signal. The summed signal by the adder 38 is supplied as imaginary part signal $X_i(k, t+1)$ of an output signal from the recursive discrete Fourier operation circuit and part of this signal is supplied to the delay circuit 42 as a recursive signal.

Here, the multiplication coefficients Γc and Γs given to the multipliers 32-35 are set up by the basic frequency setting portion 2 shown in Fig.1. In the recursive discrete Fourier operation circuit, N is set up for an object resolution according to this set frequency and the coefficient of the discrete Fourier transformation is computed depending on the N and then outputted.

In this way, complex Fourier transformation result $X_r(k, t+1) - jX_i(k, t+1)$ can be obtained with respect to the supplied data stream x (t), x(t+1), x(t+2), x(t+3), ..., x(t+N-1), x(k, t+1).

In the above equations (11), (12), with cos(2πk/N) and sin(2πk/N) as Γc and Γs, the recursive DFT operation circuit shown in Fig.4 has been described. These Γc and Γs indicate the basic frequencies and the recursive DFT operation circuit shown in Fig.4 is a module for carrying out the DFT operation to the basic frequency determined by a single **k**. Thus, by connecting N modules in parallel, it is possible to construct the DFT operation circuit for all N-point basic frequencies.

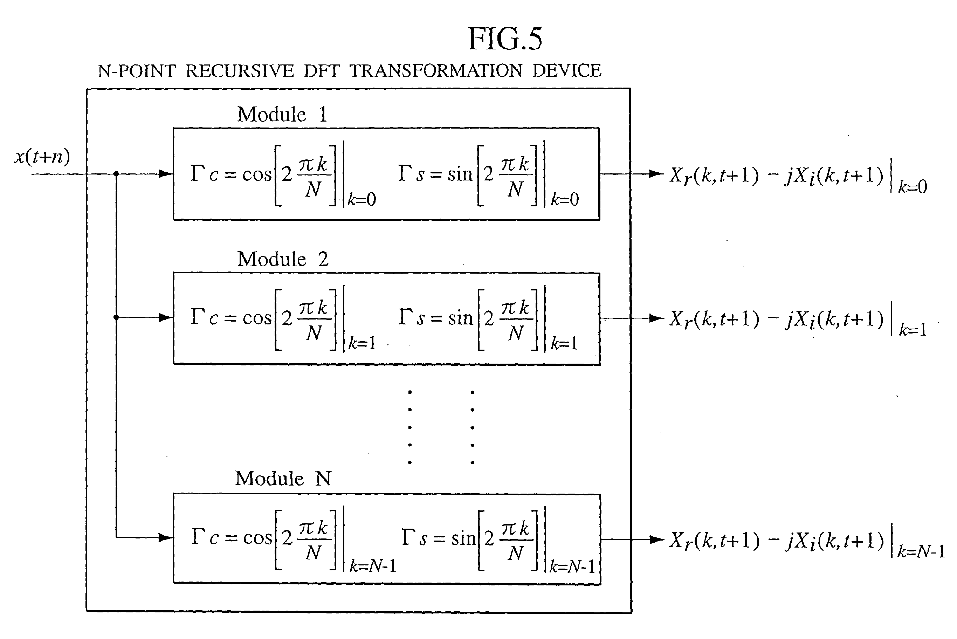

Fig.5 shows the structure of the recursive DFT operation device for N points constructed of arithmetic operation modules using N basic frequencies.

Γc and Γs in each module are expressed as follows as shown in the same Figure.

$$\Gamma c = \cos\left[2\frac{\pi k}{N}\right] \qquad \cdots \quad (15)$$

$$\Gamma s = \sin\left[2\frac{\pi k}{N}\right] \qquad \cdots \quad (16)$$

The value **k** in Γc and Γs of each module in the N-point recursive DFT operation device is set up to be N different basic frequencies under $0 \leq k \leq N-1$.

Consequently, the recursive DFT operating portion for carrying out the N-point Fourier transformation with parallel operations can be achieved.

Arithmetic operations in the recursive DFT operating portion achieved in this way are carried out every sampling period **t** according to the equations (11), (12). By changing the value **k** used in that operation from 0 to N-1, a result of Fourier transformation under each basic frequency can be obtained.

Because the recursive DFT operation executed using these transformation equations computes a Fourier transformation value at a predetermined specific point, a Fourier transformation value can be obtained independently without using any Fourier transformation value of other point or mutual dependence.

Because the Fourier transformation value at a predetermined frequency can be obtained independently, for example, if attention is paid to a specific frequency point or **k** is selected to a specific value, the value of an expression of trigonometric function shown in the aforementioned equations (11), (12) is a constant.

Comparing the conventional DFT operation, because the definition of the conventional DFT is carried out by the aforementioned equation (1) and butterfly operation in which the value of trigonometric function indicating the basic function changes with the value **k** is carried out, calculation at a specific point is difficult. However, according to the recursive DFT operation shown here, because the value expressed with the trigonometric function is constant, calculation of a Fourier coefficient for a specific point is easy.

This recursive DFT can obtain a result of the DFT transformation at a selected frequency point with a simple calculation by selecting the value **k** corresponding to a frequency to be analyzed.

Further, because the Fourier analysis can be carried out by selecting only a basic frequency desired to be subjected thereto, the number of points to be handled in a conventional FFT is not restricted to points of exponentiation number based on 2 (value indicated with power of 2; 2, 4, 8, 16, 32, 64, 128, ⋯) and the Fourier analysis can be carried out by specifying any point number.

Next, the structure of the recursive DFT operation circuit in which the arithmetic operation modules described above are disposed in parallel will be described.

The recursive Fourier transformation operation for N points shown in Fig.5 has components which carry out the same operation in the N modules disposed in parallel and thus a Fourier transformation circuit including a common portion for carrying out the operation instead of the plural components can be structured.

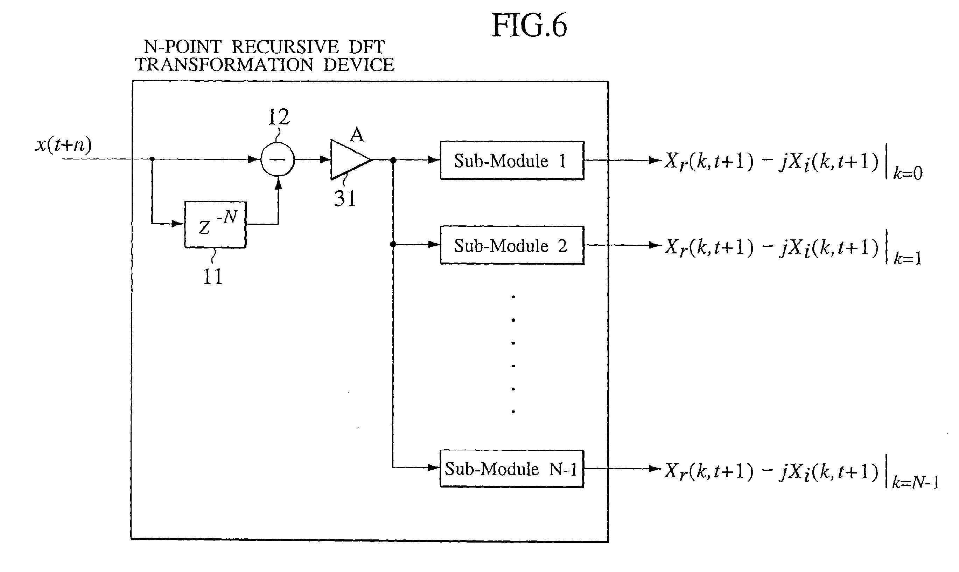

Fig.6 shows the structure of the N-point recursive DFT transformation device in which part of the modules is made common.

In the DFT shown in the same Figure, of the modules shown in Fig.5, portions carrying out the same operation are made common while not common portion are made into sub-modules.

In the recursive DFT transformation circuit shown in Fig.4 composed of modules, the delay unit 11 which accumulates data supplied by sampling by the amount corresponding to N samples, the subtractor 12, which subtracts the oldest data value stored temporarily in the delay unit 11 from the data supplied by sampling and the multiplier 31, which multiplies a signal supplied from the subtractor 12 with a predetermined coefficient **A,** are used as common components.

The sub-modules 1 to (N-1) are so constructed that such common components are removed from the modules 1 to (N-1). Each of the sub-modules 1 to (N-1) utilizes a signal supplied from the common delay unit 11, subtractor 12 and multiplier 31, so as to reduce the size and power consumption of the circuit.

The recursive discrete Fourier transformation device has been described above. Further, as a device, which performs transformation of signal format inversely, there is a recursive inverse discrete Fourier transformation device.

Although the recursive discrete Fourier transformation device is a device for transforming time-series data to frequency-basis data, the recursive inverse discrete Fourier transformation device is a device for transforming the frequency-basis data to time-series data. The recursive inverse discrete Fourier transformation device can be realized by applying the construction method of the device described here.

Then, when the frequency-basis data is transformed to time-series data by the recursive inverse discrete Fourier transformation device and then, the time-series data is transformed to the frequency-basis data by the recursive discrete Fourier transformation device, if both use corresponding parameters for transformation, its original frequency-basis data is regenerated.

Such parameters are numerical values for specifying the amplitude indicated as **A** in the aforementioned equations (13), (14) and as this numerical value, 1, N or square root of N is allocated.

That is, in case where symmetrical signal transformation or signal retransformation is carried out by supplying data generated by recursive inverse discrete Fourier transformation using, for example, numeric value **a** as a parameter to recursive discrete Fourier transformation, if the Fourier transformation is carried out using the parameter A corresponding to the parameter **a** for the Fourier inverse transformation, data prior to the transformation can be obtained.

If the amplitude of a signal given with the **a** and **A** is 1 on the Fourier inverse transformation side, 1/N is given on the Fourier transformation side, and if 1/N is given on the Fourier inverse transformation side, 1 is given on the Fourier transformation side and if the Fourier inverse transformation side depends on an inverse number of square root of N, the Fourier transformation side also give an amplitude based on an inverse number of square root of N. Consequently, data prior to transformation can be obtained by Fourier-transforming a signal subjected to Fourier inverse transformation.

When this relation has been described with reference to the aforementioned equations (11), (12),

$$\frac{1}{\sqrt{N}}$$

indicating the amplitude is assumed to be **A** and then the recursive DFT transformation circuit shown in Fig.4 has been described. This value has been introduced for definition of the DFT based on the aforementioned equation and originally is a coefficient, which exists for adjustment of the amplitude between the DFT and the IDFT.

Therefore, the multiplier 3 is designed such that the constant **A** in the recursive DFT is selected as a value corresponding to a constant **a** in the corresponding IDFT, an appropriate value which is in complementary relation with the IDFT side such as 1 or 1/N as well as

$$\frac{1}{\sqrt{N}}$$

The Fourier inverse transformation is employed in orthogonal frequency division multiplexing modulation (OFDM) signal generating unit and the Fourier transformation is employed in OFDM signal receiving unit so as to generate a signal to be digital-modulated and transmitted by the Fourier inverse transformation. On the receiving side, a transmitted signal is decoded by Fourier transformation and the constant **a** and **A** for determining the amplitude may be set up to a corresponding value as described above.

However, because the OFDM signal to be generated and transmitted actually in such a manner has many factors which may change the amplitude value (gain of a signal to be transmitted) in its process, the amplitude at the discrete Fourier transformation time does not has to accurately coincide with a value at the inverse discrete Fourier transformation time and thus the value **A** in discrete Fourier transformation may be set up by selecting a value easy to be incorporated appropriately.

The discrete Fourier transformation introduced from the equations (11), (12) and the inverse discrete Fourier transformation as its application have been described.

These equations for obtaining the Fourier coefficient is capable of obtaining a Fourier coefficient value in a simple form by using a difference between two data values separate by N samples, and sine and cosine of a basic frequency with respect to a Fourier coefficient obtained before a sample clock.

The cosine $\Gamma c$ and sine $\Gamma s$ of the basic frequency used in the discrete Fourier transformation introduced from the equations (13), (14) indicate that the recursive DFT transformation device can be constructed by using functions orthogonal to each other, and thus by using orthogonal functions to each other, for example, replacing the $\Gamma c$ with sine $\Gamma s$, the same analysis method can be realized.

For the purpose, a combination of a relation between the real part and imaginary part of a Fourier coefficient for use as a recursive signal and the polarities of these signals needs to be determined so that the Fourier coefficient can be obtained in as a simple format as possible and then, a Fourier coefficient has to be introduced according to that determined method.

<Second Embodiment>

Next, a second embodiment of the recursive discrete Fourier transformation device of the present invention will be described. In a following description, a description of common components as the first embodiment is omitted.

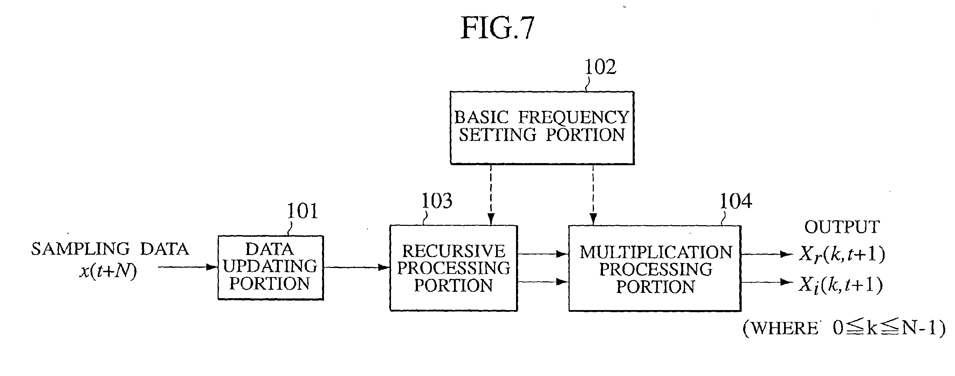

Fig.7 shows a second embodiment of the recursive discrete Fourier transformation device and it is described with the Figure.

The recursive discrete Fourier transformation device comprises a data updating portion 101 to which data sampled in a predetermined time interval is supplied and which stores temporarily supplied new N (N: positive integer) data, a basic frequency setting portion 102 in which the basic frequency for carrying out the discrete Fourier transformation is set up, a recursive processing portion 103 for carrying out signal processing while using a signal temporarily stored recursively and a multiplication processing portion 104 for carrying out multiplication processing and outputting an obtained Fourier transformation coefficient.

Next, an operation of the recursive discrete Fourier transformation device having such a structure will be described.

An operation of the data updating portion 101 is the same as the first embodiment.

Next, N data stored temporarily in the data updating portion 101 is supplied to the recursive processing portion 103 and thus Fourier transformation operation is carried out by the recursive processing portion 103 and the multiplication processing portion 104 according to a method, which will be described later.

The recursive processing portion 103 stores an intermediate result of arithmetic operation temporarily in a memory circuit contained therein and carries out signal pre-processing for executing Fourier arithmetic operation while using the temporarily stored signal recursively. The pre-processed signal is supplied to the multiplication processing portion 104, in which the multiplication processing as post processing is carried out so as to obtain the real part $X_r(k, t+1)$ and imaginary part $X_i(k, t+1)$ of the Fourier coefficient.

In order to obtain a result of Fourier arithmetic operation analyzed with a predetermined resolution, a basic frequency for giving a desired resolution is set up by the basic frequency setting portion 102 and operation parameters of the recursive processing portion 103 and the multiplication processing portion 104 are set up. Following the set parameters, the result of the Fourier analysis based on predetermined frequency resolution information is computed and outputted.

Next, this recursive discrete Fourier operation method will be described in detail with reference to the Fourier operation result conventionally carried out.

In this second embodiment, the equations (11), (12) are introduced like the first embodiment so that complex Fourier transformation result $X_r(k, t+1)-jX_i(k, t+1)$ can be obtained at time t+1.

It means that a result of Fourier transformation on the newest N-point data containing new data obtained by successive sampling at the sampling time interval shown in Fig.2 can be obtained.

Here, if it is regarded that the Fourier transformation executed in the above-described manner is a linearly invariable system in which continuous sampling data is supplied to a system having a certain coefficient and converted, this conversion processing can be regarded to be filtering processing.

Then, if 1/(square root of N) which gives an amplitude is assumed to be **A** and the real part $X_r(k,t)$ and the imaginary part $X_i(k,t)$ of Fourier coefficient with respect to data stream supplied since time t are assumed to be $Y_{r,k}(t)$ and $Y_{i,k}(t)$, the aforementioned equations (11), (12) are treated as a transformation equation of output y to input x, so that the transformation equation of the Fourier coefficient of data supplied since time t+1 can be expressed as follows.

$$y_{r,k}(t+1) = \left\{y_{r,k}(t) + A[x(t+N) - x(t)]\right\} \times \cos\left[2\frac{\pi k}{N}\right] + y_{i,k}(t)\sin\left[2\frac{\pi k}{N}\right] \quad \cdots \quad (17)$$

$$y_{i,k}(t+1) = y_{i,k}(t)\cos\left[2\frac{\pi k}{N}\right] - \left\{y_{r,k}(t) + A[x(t+N) - x(t)]\right\} \times \sin\left[2\frac{\pi k}{N}\right] \quad \cdots \quad (18)$$

$$\text{(where } A = \frac{1}{\sqrt{N}} \text{)}$$

Further, if these equations (17), (18) are subjected to Z-transformation, a result of the transformation can be expressed as shown in following equations (19), (20).

$$Y_{r,k}(z) = \left\{Y_{r,k}(z)z^{-1} + A[X(z)z^N - X(z)]\right\} \times \cos\left[2\frac{\pi k}{N}\right] + Y_{i,k}(z)z^{-1}\sin\left[2\frac{\pi k}{N}\right] \quad \cdots (19)$$

$$Y_{i,k}(z) = Y_{i,k}(z)z^{-1}\cos\left[2\frac{\pi k}{N}\right] - \left\{Y_{r,k}(z)z^{-1} + A[X(z)z^N - X(z)]\right\}\sin\left[2\frac{\pi k}{N}\right] \quad \cdots \quad (20)$$

If a transfer function of output Y(z) to input X(z) is assumed to be H(z), H(z) is given in a following equation.

$$H(z) = \frac{Y(z)}{X(z)}$$

Then, if the equations (19), (20) are treated as simultaneous equations and it is intended to obtain respective transfer functions of the real part and imaginary part, they can be obtained as shown in following equations (21), (22).

$$H_r(z) = A(1 - z^{-N})\left\{\frac{\cos\left[2\frac{\pi k}{N}\right] - z^{-1}}{1 - 2\cos\left[2\frac{\pi k}{N}\right]z^{-1} + z^{-2}}\right\} \quad \cdots \quad (21)$$

$$H_i(z) = A(1 - z^{-N})\left\{\frac{-\sin\left[2\frac{\pi k}{N}\right]}{1 - 2\cos\left[2\frac{\pi k}{N}\right]z^{-1} + z^{-2}}\right\} \quad \cdots \quad (22)$$

Like this, a transfer function indicating the recursive DFT is expressed in a following equation (23).

$$H(z) = A(1 - z^{-N})\left\{\frac{\cos\left[2\dfrac{\pi k}{N}\right] - j\sin\left[2\dfrac{\pi k}{N}\right] - z^{-1}}{1 - 2\cos\left[2\dfrac{\pi k}{N}\right]z^{-1} + z^{-2}}\right\} \qquad \cdots \ (23)$$

In this equation, $1-Z^{-N}$ indicates deletion of the oldest data upon updating the input data and a portion expressed with a fraction is so constructed that its numerator and its denominator are IIR filters (cyclic filter) having primary and secondary degrees respectively.

Although the DFT is a FIR filter for carrying out processing to a finite point number N, if it is achieved with a IIR filter as shown in the aforementioned equation (23), it can be constructed with a simpler hardware than the FIR filter.

Next, a method for achieving the characteristic expressed with this transfer function with hardware will be described.

Here, if the basic frequencies cos (2πk/N) and sin (2πk/N) are assumed to be Γc, Γs (gamma c, gamma s), the equation (23) can be expressed as follows.

$$H(z) = A(1 - z^{-N})\left(\frac{\Gamma_c - j\Gamma_s - z^{-1}}{1 - 2\Gamma_c z^{-1} + z^{-2}}\right) \qquad \cdots \ (24)$$

$$(\text{Where,} \quad \Gamma c = \cos\left[2\frac{\pi k}{N}\right], \quad \Gamma s = \sin\left[2\frac{\pi k}{N}\right], \quad A = \frac{1}{\sqrt{N}}\ )$$

A method for structuring the recursive DFT based on the equation (24) will be described.

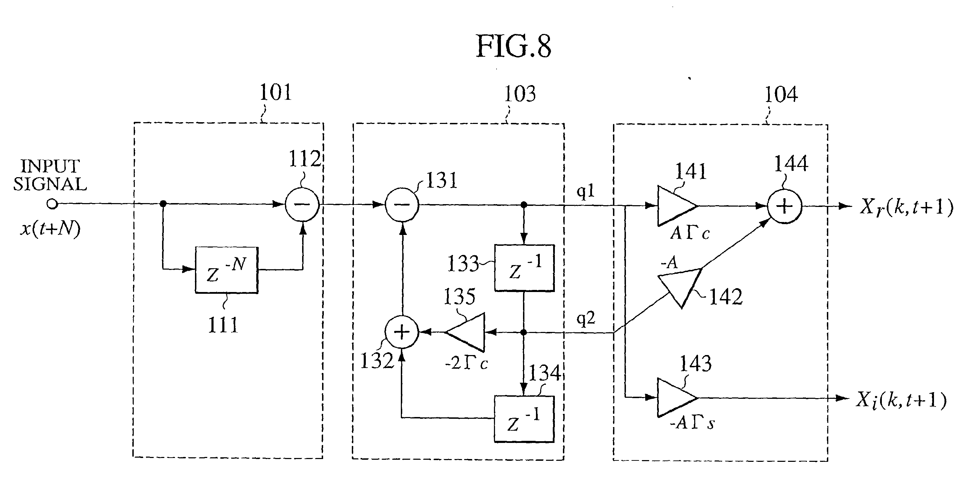

Fig.8 shows a recursive DFT operation unit for carrying out the discrete Fourier transformation and the structure and operation thereof will be described in detail.

The recursive DFT operation unit comprises an updating processing portion 101 including a memory 111 and a subtractor 112, a recursive processing portion 103 including a subtractor 131, an adder 132, memories 133, 134 and a multiplier 135 and a multiplication processing portion 104 including multipliers 141, 142, 143 and 144.

In the same Figure, the memory 111 is notated with $Z^{-N}$ and the memories 133, 134 are notated with $Z^{-1}$. The number of this exponent indicates a period during which supplied data is stored temporarily. -N indicates temporarily storing in N sampling period while -1 indicates temporarily storing in a sampling period.

Further, the subtractors 112, 131 subtracts signals supplied in a vertical direction (from down to up) from signals supplied in a horizontal direction in the same Figure and a signal obtained by the subtraction is supplied as subtraction output.

The adders 132, 144 sum up two supplied signals indicated with arrows, so that a signal obtained by the summing is outputted.

The multipliers 135, 141, 142, 143 multiply a supplied signal with a value based on a symbol indicated on the side of a multiplier in the same Figure and supply a result of the multiplication. The values with which those multipliers multiply are -2Γc, AΓc, -A, -AΓs.

Next, an operation of the recursive DFT operation device having such a structure will be described.

First, x(t+N) is supplied to the subtractor 112 and the memory 111 as an input signal.

The memory 111 delays a supplied signal by N sampling periods. The output signal of the memory 111 at this time is supplied as a signal supplied before the N sampling periods, that is, x(t) is outputted while it is supplied as a subtraction signal to the subtracter 112. Thus, the updating processing portion 101 carries out arithmetic operation of x(t+N)-x(t).

The updating processing portion 101 updates data accumulated in each of N sample clocks . In another view, such signal processing is a processing in which an input signal is multiplied with $1-Z^{-N}$ which is a first transfer function.

A signal obtained by such processing is supplied to the subtractor 131 in the recursive processing portion 103. Here, a signal from the adder 132 is subtracted and part of signals obtained by the subtraction is supplied to the multiplication processing portion 104 while the other part thereof is supplied to the memory 133.

Signals delayed by a sample period by the memory 133 are supplied to the multiplier 135, the memory 134 and the multiplier 142 of the multiplication processing portion 104.

A signal multiplied with a predetermined number by the multiplier 135, supplied by the memory 133 is supplied to an input terminal of the adder 132. Then, a signal delayed by one more sample period by the memory 134 is supplied to other input terminal of the adder 132 and summed up with the aforementioned signal, and the summed signal is supplied to a subtraction signal terminal of the subtractor 131.

In other words, a signal obtained by providing a signal outputted from the subtractor 131 with the characteristic $-2\Gamma_c \times Z^{-1}$ from the memory 133 and the multiplier 135 and a signal obtained by providing a signal outputted from the subtractor 131 with the characteristic $Z^{-2}$ from the memories 133, 134 are summed up by the adder 132. Then, the result of the summing is supplied to the subtraction signal terminal of the subtractor 131. The subtractor 131 subtracts a result of the summing from a signal from the updating processing portion 101. Therefore, the recursive processing portion 103 carries out multiplication processing expressed with a second transfer function $1/(1-2\Gamma_c \times Z^{-1} + Z^{-2})$ to carry out arithmetic operation using old data recursively.

A signal q1 obtained by multiplying with a second transfer function and a signal q2 obtained by delaying the signal q1 by a sample period by the memory 133 are supplied to the multiplying portion 104.

In the multiplication processing portion 104, one of the signals q1 is multiplied with A$\Gamma$c by the multiplier 41 to obtain a first multiplication signal and the signal q2 is multiplied with -A by the multiplier 142 to obtain a second multiplication signal. These first and second multiplication signals are supplied to the adder 144, in which they are summed up to obtain a signal $X_r(k, t+1)$. This obtained signal is supplied as a real-part signal of a Fourier coefficient.

The other of the signals q1 supplied to the multiplication processing portion 104 is multiplied with -A$\Gamma$c to obtain a signal $X_i(k. t+1)$ and the obtained signal is supplied as an imaginary part signal of the Fourier coefficient.

In arithmetic operation of the transfer function in the multiplication processing portion 104, an operation for the real part and an operation for the imaginary part with respect to a third transfer function $A(\Gamma_c-j\Gamma_s-Z^{-1})$ are executed independent of each other so as to obtain a complex Fourier coefficient output signal.

As described above, the recursive DFT arithmetic operation device can introduce complex Fourier transformation result $X_r(k, t+1)-jX_i(k, t+1)$ at time t+1 by using data x(t+N) sampled and supplied at time t+1 and using recursively intermediate data under Fourier operation for data supplied before.

Although in Fig.8, the signals supplied from the recursive processing portion 103 are two signals, q1 and q2, if the multiplication processing portion 104 contains the memory 133, it is permissible to omit a signal line of the q2.

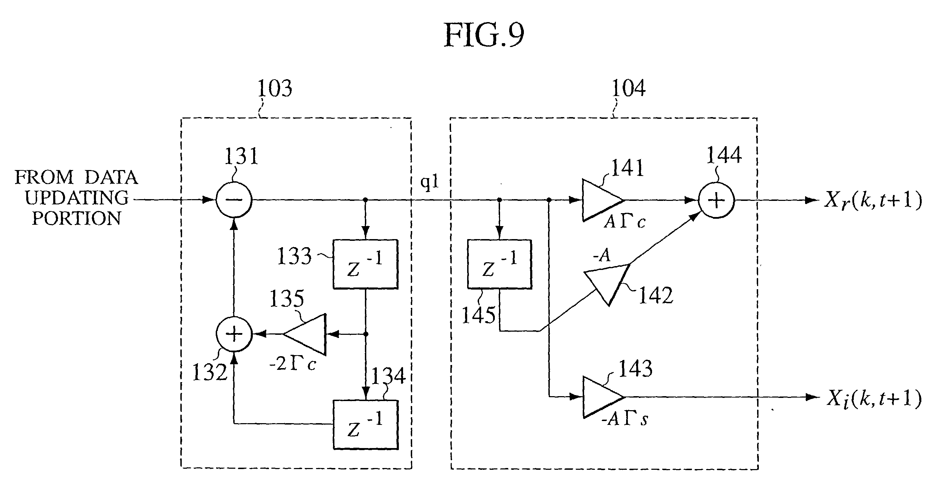

Fig.9 shows the structure in case where the recursive processing portion 103 and the multiplication processing portion 104 are connected through a single signal line q1.

However, the multiplication processing portion 104 requires additionally a memory 145 compared with the multiplication processing 104 of Fig.8.

In the above descriptions, the recursive DFT operation device can be constructed by dividing the transfer function shown in the aforementioned equation (24) to first transfer function $1-Z^{-N}$, second transfer function $1/(1-2\Gamma_c Z^{-1}+Z^{-2})$ and third transfer function $A(\Gamma_c-j\Gamma_s-Z^{-1})$. By constructing the arithmetic logic circuits having these delay, addition/subtraction and multiplication functions with digital circuits, it is possible to configure the recursive discrete Fourier transformation circuit with a smaller, simple circuit block.

According to the recursive discrete Fourier transformation method using the transfer function, the Fourier analysis can be carried out by selecting a desired basic frequency. Thus, the number of points to be handled is not restricted to power of 2 unlike in case of the FFT, so that any positive integer can be adopted.

Further, in the Fourier transformation carried out using any integer N, it is possible to perform a frequency analysis with high resolution in time direction by changing the length N of supplied data stream, for example, increasing the value of N. That is, because an operation result, in which the degree of analysis resolution of Fourier transformation is set to a desired value, can be obtained by changing the value N, the recursive discrete Fourier transformation circuit having such a structure can execute the Fourier transformation processing by selecting any resolution.

As described above, the recursive DFT operation device can execute the Fourier transformation processing by selecting any resolution. The frequency resolution can be set to any resolution depending on each frequency subjected to analysis.

According to the second embodiment, the Fourier transformation can be carried out to individual frequencies at the same time with the structure shown in Fig.5 like the first embodiment.

Further, it is permissible to construct a N-point recursive DFT transformation device whose part of the modules are used in common like the first embodiment.

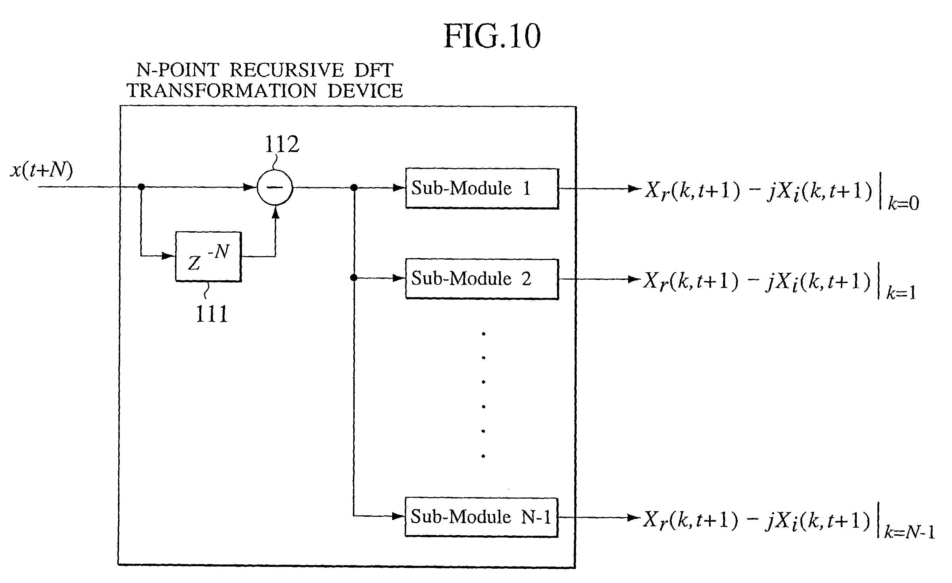

Fig.10 shows the structure of the N-point recursive DFT transformation device whose part of the modules are used in common according to the second embodiment.

In the recursive DFT transformation circuit shown in Fig.8, composed of modules, the delay units 111 for accumulating data sampled and supplied by the amount corresponding to N samples and the subtractors 112 which subtract the oldest data stored temporarily in the delay unit 111 from data value sampled and supplied are used in common.

The sub-modules 1 to (N-1) are so constructed that these common components are removed from the modules 1 to (N-1). The sub-modules 1 to (N-1) employ signals supplied from the common delay units 111 and subtractors 112 in common, thereby achieving reductions of circuit size and power consumption.

According to the second embodiment, the recursive inverse discrete Fourier transformation device, which carries out transformation of signal format inversely, can be constructed like the first embodiment. Therefore, a description about the recursive inverse discrete Fourier transformation device of the first embodiment is applicable to the second embodiment just as it is.

It should be understood that many modifications and adaptations of the invention will become apparent to those skilled in the art and it is intended to encompass such obvious modifications and changes in the scope of the claims appended hereto.

**Claims**

1. A recursive discrete Fourier transformation device wherein data values $x(t)$, $x(t+1)$, $x(t+2)$, $x(t+3)$, ..., $x(t+N-1)$, $x(t+N)$ sampled at times $t$, $t+1$, $t+2$, $t+3$, ..., $t+N-1$, $t+N$ (N is a positive integer which is 1 or more) each having an equal interval are supplied and as complex Fourier coefficients under degree $k$ ($k$ is 0 or a positive integer smaller than N) obtained by, with such N data values supplied since time $t$ as a data stream, carrying out complex Fourier transformation on the data stream, a real part $X_r(k, t)$ and an imaginary part $X_i(k, t)$ are obtained, the discrete Fourier transformation device comprising:

   a first temporary storage means (11) for storing the data stream $x(t)$, $x(t+1)$, $x(t+2)$, $x(t+3)$, ..., $x(t+N-1)$ supplied since time $t$ at time $t+N-1$ temporarily;
   a discrete Fourier operation means for obtaining the complex Fourier coefficients $X_r(k, t)$ and $X_i(k, t)$ of the data stream stored temporarily in the first storage means (11); and
   a second temporary storage means (4) for storing the complex Fourier coefficients $X_r(k, t)$ and $X_i(k, t)$ obtained by the discrete Fourier operation means,
   the discrete Fourier operation means including:

   a subtracting portion (12) for obtaining a data value of a difference between a data value $x(t+N)$ supplied at time $t+N$ and a data value $x(t)$ memorized temporarily in the first storage means (11);
   a constant multiplying portion (31) for obtaining a signal with a predetermined amplitude by multiplying the obtained data value of the difference with a positive constant value A for giving a predetermined amplitude;
   an adder portion (36) for obtaining a summed signal by summing the signal with the predetermined amplitude obtained from the constant multiplying portion (31) and one of the real part $X_r(k, t)$ and the imaginary part $X_i(k, t)$ of the complex Fourier coefficients stored temporarily in the second temporary storage means (4); and
   a basic function arithmetic processing portion (30) for receiving the summed signal obtained from the adder portion (36) and the other of the real part $X_r(k, t)$ and the imaginary part $X_i(k, t)$ of the complex Fourier coefficients stored temporarily in the second temporary storage means (4) and carrying out an arithmetic operation on the received signals using a constant based on a basic frequency thereby to obtain the complex Fourier coefficients $X_r(k, t+1)$ and $X_i(k, t+1)$ at time $t+1$.

2. A recursive discrete Fourier transformation device as claimed in claim 1 wherein the positive constant value A for providing with an amplitude corresponding to a difference between the $x(t+N)$ and the $x(t)$ is capable of being set selectively with 1, square root of N or 1/N.

3. A recursive discrete Fourier transformation device wherein data values $x(t)$, $x(t+1)$, $x(t+2)$, $x(t+3)$, ..., $x(t+N-1)$, $x(t+N)$ sampled at times $t$, $t+1$, $t+2$, $t+3$, ..., $t+N-1$, $t+N$ (N is a positive integer which is 1 or more) each having an equal interval are supplied and as complex Fourier coefficients under degree $k$ ($k$ is 0 or a positive integer smaller than N) obtained by, with such N data values supplied since time $t$ as a data stream, carrying out complex Fourier transformation on the data stream, a real part $X_r(k, t)$ and an imaginary part $X_i(k, t)$ are obtained, the discrete Fourier transformation device comprising:

   a first temporary storage means (11) for storing the data stream $x(t)$, $x(t+1)$, $x(t+2)$, $x(t+3)$, ..., $x(t+N-1)$ supplied since time $t$ at time $t+N-1$ temporarily;
   a discrete Fourier operation means for obtaining the complex Fourier coefficients $X_r(k, t)$ and $X_i(k, t)$ of the data stream stored temporarily in the first storage means (11); and

a second temporary storage means (4) for storing the complex Fourier coefficients $X_r(k, t)$ and $X_i(k, t)$ obtained by the discrete Fourier operation means,

wherein the discrete Fourier operation means obtains complex Fourier coefficients $X_r(k, t)$ and $X_i(k, t)$ according to following equations.

$$X_r(k, t+1) = \left\{ X_r(k,t) + \frac{1}{A} \left[ x(t+N) - x(t) \right] \right\} \times \cos \left[ 2 \frac{\pi k}{N} \right] + X_i(k,t) \sin \left[ 2 \frac{\pi k}{N} \right]$$

$$X_i(k, t+1) = X_i(k,t) \cos \left[ 2 \frac{\pi k}{N} \right] - \left\{ X_r(k,t) + \frac{1}{A} \left[ x(t+N) - x(t) \right] \right\} \sin \left[ 2 \frac{\pi k}{N} \right]$$

where, A is a positive constant value for providing [x(t+N)-x(t)] with an amplitude.

4. A recursive discrete Fourier transformation device as claimed in claim 3 wherein the positive constant value A for providing with an amplitude corresponding to a difference between the x(t+N) and the x(t) is capable of being set selectively with 1, square root of N or 1/N.

5. A recursive discrete Fourier transformation device wherein data values x(t), x(t+1), x(t+2), x(t+3), ..., x(t+N-1). x (t+N) sampled at times t, t+1, t+2, t+3, ..., t+N-1, t+N (N is a positive integer which is 1 or more) each having an equal interval are supplied and with such N data values supplied since time t as a data stream, complex Fourier transformation is carried out to the data stream using a plurality of degrees k (k is 0 or a positive integer smaller than N) so as to obtain real parts $X_r(k, t)$ and imaginary parts $X_i(k, t)$ as plural sets of complex Fourier coefficients, the discrete Fourier transformation device comprising:

a first temporary storage means (11) for storing the data stream x(t), x(t+1), x(t+2), x(t+3), ..., x(t+N-1) supplied since time t at time t+N-1 temporarily;
plural discrete Fourier operation means for obtaining the complex Fourier coefficients $X_r(k, t)$ and $X_i(k, t)$ for the data stream stored temporarily in the first storage means (11) for each of plural k values; and
a second temporary storage means (4) for storing each set of the complex Fourier coefficients $X_r(k, t)$ and $X_i$ (k, t) obtained by the plural discrete Fourier operation means corresponding to each k value,
the discrete Fourier operation means including:

a subtracting portion (12) for obtaining a data value of a difference between a data value x(t+N) supplied at time t+N and a data value x(t) memorized temporarily in the first storage means (11);
a constant multiplying portion (31) for obtaining a signal with a predetermined amplitude by multiplying the data value of the difference obtained by the subtracting portion (12) with a positive constant value A for giving a predetermined amplitude;
an adder portion (36) for obtaining a summed signal by summing the signal with the predetermined amplitude obtained from the constant multiplying portion (31) and one of a real part $X_r(k, t)$ and an imaginary part (k, t) of the complex Fourier coefficients stored temporarily by the second temporary storage means (4); and
a basic function arithmetic processing portion (30) for receiving the summed signal obtained from the adder portion and the other of the real part $X_r(k, t)$ and the imaginary part (k, t) of the complex Fourier coefficients stored temporarily in the second temporary storage means (4) and carrying out an arithmetic operation on the received signals using a constant based on a basic frequency thereby to obtain complex Fourier coefficients $X_r(k, t+1)$ and $X_i(k, t+1)$ at time t+1.

6. A recursive discrete Fourier transformation device as claimed in claim 5 wherein the quantity of the degrees k is N.

7. A recursive discrete Fourier transformation device as claimed in claim 5 wherein the positive constant value A for providing with an amplitude corresponding to a difference between the x(t+N) and the x(t) is capable of being set selectively with 1, square root of N or 1/N.

8. A recursive discrete Fourier transformation device wherein data values x(t), x(t+1), x(t+2), x(t+3), ..., x(t+N-1), x(t+N) sampled at times t, t+1, t+2, t+3, ..., t+N-1, t+N (N is a positive integer which is 1 or more) each having an equal interval are supplied and with such N data values supplied since time t as a data stream, complex Fourier transformation is carried out to the data stream using a plurality of degrees k (k is 0 or a positive integer smaller than N) so as to obtain real parts $X_r(k, t)$ and imaginary parts $X_i(k, t)$ as plural sets of complex Fourier coefficients, the discrete Fourier transformation device comprising:

a first temporary storage means (11) for storing the data stream x(t), x(t+1), x(t+2), x(t+3), ..., x(t+N-1) supplied since time t at time t+N-1 temporarily;
plural discrete Fourier operation means for obtaining the complex Fourier coefficients $X_r(k, t)$ and $X_i(k, t)$ for the data stream stored temporarily in the first storage means (11) for each of plural k values; and
a second temporary storage means (4) for storing each set of complex Fourier coefficients $X_r(k, t)$ and $X_i(k, t)$ obtained by the plural discrete Fourier operation means corresponding to each k value,
the discrete Fourier operation means including:

a common subtracting portion (12) for obtaining a data value of a difference between a data value x(t+N) supplied at time t+N and a data value x(t) memorized temporarily in the first storage means (11);
a common constant multiplying portion (31) for obtaining a signal with a predetermined amplitude by multiplying the data value of the difference obtained by the common subtracting portion (12) with a positive constant value A for giving a predetermined amplitude;
an adder portion (36) for obtaining a summed signal by summing the signal with the predetermined amplitude obtained from the common constant multiplying portion (31) and one of a real part $X_r(k, t)$ and an imaginary part (k, t) of the complex Fourier coefficients stored temporarily in the second temporary storage means (4); and
a basic function arithmetic processing portion (30) for receiving the summed signal obtained from the adder portion (36) and the other of the real part $X_r(k, t)$ and the imaginary part $X_i(k, t)$ of the complex Fourier coefficients stored temporarily in the second temporary storage means (4) and carrying out an arithmetic operation on the received signals using a constant based on a basic frequency thereby to obtain the complex Fourier coefficients $X_r(k, t+1)$ and $X_i(k, t+1)$ at time t+1.

9. A recursive discrete Fourier transformation device as claimed in claim 8 wherein the quantity of the degrees k is N.

10. A recursive discrete Fourier transformation device as claimed in claim 8 wherein the positive constant value A for providing with an amplitude corresponding to a difference between the x(t+N) and the x(t) is capable of being set selectively with 1, square root of N or 1/N.

11. A recursive discrete Fourier transformation device wherein data values x(t), x(t+1), x(t+2), x(t+3), ..., x(t+N-1), x(t+N) sampled at times t, t+1, t+2, t+3, ..., t+N-1, t+N (N is a positive integer which is 1 or more) each having an equal interval are supplied and as a complex Fourier coefficient under degree k (k is 0 or a positive integer smaller than N) obtained by, with such N data values supplied since time t as a data stream, carrying out complex Fourier transformation on the data stream, a real part $X_r(k, t)$ and an imaginary part $X_i(k, t)$ are obtained, the discrete Fourier transformation device comprising:

a data updating means for obtaining a first subtraction signal by subtracting data x(t) supplied before N sampling period from data x(t+N) supplied at time t+N;
a recursive processing means for obtaining a new second subtraction signal by subtracting an addition signal generated recursively using an already generated second subtraction signal from the obtained first subtraction signal; and
a multiplying means for obtaining the real part $X_r(k, t)$ of the Fourier coefficients by summing up a signal obtained by multiplying the new second subtraction signal obtained by the recursive processing means with a first constant value and a signal obtained by multiplying the second subtraction signal supplied before a sampling period with a second constant value and for obtaining the imaginary part $X_i(k, t)$ of the Fourier coefficients by multiplying the new second subtraction signal with a third constant value,

wherein the addition signal generated recursively by the recursive processing means is a signal obtained by summing up a signal obtained by multiplying the second subtraction signal obtained before a sampling period with a fourth constant value and the second subtraction signal obtained before two sampling periods.

**12.** A recursive discrete Fourier transformation device wherein data values x(t), x(t+1), x(t+2), x(t+3), ..., x(t+N-1), x (t+N) sampled at times t, t+1, t+2, t+3, ..., t+N-1, t+N (N is a positive integer which is 1 or more) each having an equal interval are supplied and as a complex Fourier coefficient under degree k (k is 0 or a positive integer smaller than N) obtained by, with such N data values supplied since time t as a data stream, carrying out complex Fourier transformation on the data stream, a real part $X_r(k, t)$ and an imaginary part $X_i(k, t)$ are obtained, the discrete Fourier transformation device comprising:

a data updating means (101) for obtaining a first subtraction signal by subtracting data x(t) supplied before N sampling period from data x(t+N) supplied at time t+N;
a recursive processing means (102) for obtaining a new second subtraction signal by subtracting an addition signal generated recursively using an already generated second subtraction signal from the obtained first subtraction signal; and
a multiplying means (104) for obtaining the real part $X_r(k, t)$ of the Fourier coefficients by summing up a signal obtained by multiplying the new second subtraction signal obtained by the recursive processing means (104) with a first constant value and a signal obtained by multiplying the second subtraction signal supplied before a sampling period with the second constant and for obtaining the imaginary part $X_i(k, t)$ of the Fourier coefficients by multiplying the new second subtraction signal with a third constant value,

wherein a transfer function H(Z) for the data updating means (101), the recursive processing means (103) and the multiplying means (104) connected as subsidiary components is given according to a following equation.

$$H(z) = A\left(1 - z^{-N}\right)\left\{\frac{\cos\left[2\frac{\pi k}{N}\right] - j\sin\left[2\frac{\pi k}{N}\right] - z^{-1}}{1 - 2\cos\left[2\frac{\pi k}{N}\right]z^{-1} + z^{-2}}\right\}$$

where A is a positive constant value for providing [x(t+N)-x(t)] with an amplitude.

**13.** A recursive discrete Fourier transformation device as claimed in claim 12 wherein the positive constant value A for providing with an amplitude corresponding to a difference between the x(t+N) and the x(t) is capable of being set selectively with 1, an inverse number of square root of N or 1/N.

**14.** A recursive discrete Fourier transformation device wherein data values x(t), x(t+1), x(t+2), x(t+3), ..., x(t+N-1), x (t+N) sampled at times t, t+1, t+2, t+3, ..., t+N-1, t+N (N is a positive integer which is 1 or more) each having an equal interval are supplied and with such N data values supplied since time t as a data stream, complex Fourier transformation is carried out to the data stream using a plurality of degrees k (k is 0 or a positive integer smaller than N) so as to obtain real parts $X_r(k, t)$ and imaginary parts $X_i(k, t)$ as plural sets of complex Fourier coefficients, the discrete Fourier transformation device comprising:

plural data updating means (101) corresponding to the plurality of degrees k, for obtaining a first subtraction signal by subtracting data x(t) supplied before N sampling period from data x(t+N) supplied at time t+N;
plural recursive processing means (103) corresponding to the plurality of degrees k, for obtaining a new second subtraction signal by subtracting an addition signal generated recursively using an already generated second subtraction signal from the obtained first subtraction signal; and
plural multiplying means (104) corresponding to the plurality of degrees k, for obtaining a real part $X_r(k, t)$ of the Fourier coefficients by summing up a signal obtained by multiplying the new second subtraction signal obtained by the recursive processing means (103) with a first constant value and a signal obtained by multiplying the second subtraction signal supplied before a sampling period with the second constant and for obtaining an imaginary part $X_i(k, t)$ of the Fourier coefficients by multiplying the new second subtraction signal with a third constant value,

wherein the addition signal generated recursively by each of the plural recursive processing means (103) is a signal obtained by summing up a signal obtained by multiplying the second subtraction signal obtained before a sampling period with a fourth constant value corresponding to each degree k, and the second subtraction signal obtained before two sampling periods.

**15.** A recursive discrete Fourier transformation device as claimed in claim 14 wherein the quantity of the degrees k is N.

**16.** A recursive discrete Fourier transformation device wherein data values $x(t)$, $x(t+1)$, $x(t+2)$, $x(t+3)$, ..., $x(t+N-1)$, $x(t+N)$ sampled at times $t$, $t+1$, $t+2$, $t+3$, .., $t+N-1$, $t+N$ (N is a positive integer which is 1 or more) each having an equal interval are supplied, data $x(t)$ supplied before N sampling period is subtracted from data $x(t+N)$ supplied at time $t+N$ so as to obtain a first subtraction signal, and with such N data values supplied since time t as a data stream based on the obtained first subtraction signal, a complex Fourier transformation is carried out to the data stream using a plurality of degrees k (k is 0 or a positive integer smaller than N) so as to obtain real parts $X_r(k, t)$ and imaginary parts $X_i(k, t)$ as plural sets of complex Fourier coefficients, the discrete Fourier transformation device comprising:

plural recursive processing means (103) corresponding to the plurality of degrees k, for obtaining a new second subtraction signal by subtracting an addition signal generated recursively using an already generated second subtraction signal from the obtained first subtraction signal; and
plural multiplying means (104) corresponding to the plurality of degrees k, for obtaining a real part $X_r(k, t)$ of the Fourier coefficients by summing up a signal obtained by multiplying the new second subtraction signal obtained by the recursive processing means (103) with a first constant value and a signal obtained by multiplying the second subtraction signal supplied before a sampling period with the second constant and for obtaining an imaginary part $X_i(k, t)$ of the Fourier coefficients by multiplying the new second subtraction signal with a third constant value,

wherein the addition signal generated recursively by each of the plural recursive processing means (103) is a signal obtained by summing up a signal obtained by multiplying the second subtraction signal obtained before a sampling period with a fourth constant value corresponding to each degree k, and the second subtraction signal obtained before two sampling periods.

**17.** A recursive discrete Fourier transformation device as claimed in claim 16 wherein the quantity of the degrees k is N.

FIG.1

SAMPLING DATA $x(t+N)$ → 1 DATA UPDATING PORTION → 3 RECURSIVE DFT OPERATING PORTION

2 BASIC FREQUENCY SETTING PORTION

4 MEMORY

OUTPUT $X_r(k,t+1)+jX_i(k,t+1)$ $0 \leqq k \leqq N-1$

# FIG.2

SAMPLING
PERIOD
ts

DFT POINTS IN TIME T

| x(t) | x(t+1) | x(t+2) | • • • • • • | x(t+N-3) | x(t+N-2) | x(t+N-1) |

DFT POINTS IN TIME T+1

TIME

| x(t+1) | x(t+2) | x(t+3) | • • • • • • | x(t+N-2) | x(t+N-1) | x(t+N) |

FIG.3

EP 1 176 516 A2

# FIG.4

INPUT SIGNAL

$x(t+n)$

$X_r(k,t+1)$

$X_i(k,t+1)$

EP 1 176 516 A2

FIG.5

N-POINT RECURSIVE DFT TRANSFORMATION DEVICE

# FIG.6

N-POINT RECURSIVE DFT
TRANSFORMATION DEVICE

$x(t+n)$

$12$

$A$

$31$

$Z^{-N}$

$11$

Sub-Module 1 → $X_r(k,t+1) - jX_i(k,t+1)\big|_{k=0}$

Sub-Module 2 → $X_r(k,t+1) - jX_i(k,t+1)\big|_{k=1}$

Sub-Module N-1 → $X_r(k,t+1) - jX_i(k,t+1)\big|_{k=N-1}$

# FIG.7

SAMPLING DATA
$x(t+N)$

→ 101 DATA UPDATING PORTION

→ 103 RECURSIVE PROCESSING PORTION

102 BASIC FREQUENCY SETTING PORTION

→ 104 MULTIPLICATION PROCESSING PORTION

OUTPUT
$X_r(k,t+1)$
$X_i(k,t+1)$

(WHERE $0 \leqq k \leqq N-1$)

EP 1 176 516 A2

# FIG.8

INPUT SIGNAL

$x(t+N)$

$X_r(k,t+1)$

$X_i(k,t+1)$

101 103 104

111 112 131 133 135 132 134 141 142 143 144

$Z^{-N}$ $Z^{-1}$ $Z^{-1}$

q1 q2

$A\Gamma c$ $-A$ $-2\Gamma c$ $-A\Gamma s$

EP 1 176 516 A2

32

# FIG.9

EP 1 176 516 A2

# FIG.10

EP 1 176 516 A2

N-POINT RECURSIVE DFT
TRANSFORMATION DEVICE

$x(t+N)$

112

$z^{-N}$

111

Sub-Module 1 $\longrightarrow X_r(k,t+1) - jX_i(k,t+1)\Big|_{k=0}$

Sub-Module 2 $\longrightarrow X_r(k,t+1) - jX_i(k,t+1)\Big|_{k=1}$

Sub-Module N-1 $\longrightarrow X_r(k,t+1) - jX_i(k,t+1)\Big|_{k=N-1}$